# EUROPEAN PATENT APPLICATION

(11) **EP 1 898 625 A2**
(43) Date of publication of application: **12.03.2008**
(21) Application number: 07016588.1
(22) Date of filing: 23.08.2007
(51) Int. Cl.: H04N 1/46

(54) **Apparatus and method for deciding image color**

(30) Priority: 06.09.2006 JP 2006242189; 06.09.2006 JP 2006242193; 12.07.2007 JP 2007183147; 12.07.2007 JP 2007183148
(71) Applicant: Murata Machinery, Ltd., 3 Minami Ochiai-cho, Kisshoin Minami-ku, Kyoto-shi, Kyoto (JP)
(72) Inventor: Minamino, Katsushi, Kyoto 612-8686 (JP)
(74) Representative: Schoppe, Fritz

(57) **Abstract**

An image color decision apparatus according to the present invention includes a ground color decision unit and a target image decision unit. The ground color decision unit decides presence or absence of a ground color in a target image based on image data concerning the target image, and the ground color decision unit decides the ground color when the target image has the ground color. The target image decision unit uses the decision result of the ground color decision unit to make a color decision of the target image based on the image data concerning the target image.

## Description

### CROSS-REFERENCE TO RELATED APPLICATIONS

This application claims priority under 35 U.S.C. 119 to Japanese Patent Application No. 2006-242189, filed on September 6, 2006, and Japanese Patent Application No. 2006-242193, filed on September 6, 2006, which application is hereby incorporated by reference in its entirety.

### BACKGROUND OF THE INVENTION

### 1. Field of the Invention

The present invention relates to an apparatus and a method for deciding a ground color of a target image, particularly to the improved apparatus and method for making a good color decision even if the ground color exists in an original.

### 2. Description of the Related Art

Generally, an apparatus having a color printing function includes a color mode in which color printing is performed onto print paper and a monochrome mode in which monochrome (only gray-scale expression of an achromatic color) printing is performed onto print paper, and the apparatus is configured to print a target image in one of the processing modes. Usually, a user selects the processing mode. However, sometimes the target image is printed in the processing mode which is not suitable to the color of the actual image due to selection mistake such that the monochrome image is printed in the color mode. Therefore, there is already known a technique of automatically deciding whether the image is a color image or a monochrome image.

For example, in the conventional color-monochrome decision technique, there is proposed a technique in which the image is divided into a plurality of blocks, the block color representative of the color included in each block is decided, and the decision as to whether the image is a color image or a monochrome image is made based on the result of counting the number of block colors in the image.

There are already known an image processing apparatus and an image analysis apparatus for performing a predetermined process based on the ground color or background color of an original. In the image analysis apparatus, the colors of the portions except the ground color of the original are replaced based on comparison between the color of the ground color portion of the original and the colors of the other portions.

Additionally, there is already known a technique in which a position of an original end is roughly detected from an input image by a Hough transform or the like, a ground color candidate and a background color candidate are estimated from a peak value of a histogram for each of RGB values at the detected original end, and the original end is finally determined from the estimated ground color candidate and the background color candidate.

At this point, when a colored ground-color exists in the original, in the color/monochrome decision, it is decided that the original is "color". However, even if the colored ground-color exists in the original, in the original where black characters are described, sometimes it is desired that the original be decided as "monochrome".

A technique of selecting the processing mode and image processing in the processing mode will be studied in the case where the image (hereinafter also simply referred to as "original image") scanned from the original is converted from an RGB color space into an Lab (lightness L and chromaticities a and b) color space to define a range where chromaticity is substantially equal to that of the ground color (chromatic color) and a region which becomes the achromatic color as an achromatic region.

For example, in selecting the processing mode, when it is decided that the pixels of the original image belong not to the chromatic region but to the achromatic region, the monochrome mode is selected as the processing mode of the original image. In performing the recording process of recording the original image on recording paper after removing the ground color as the processing of the monochrome mode, the following problems are generated when the ground color removing process of replacing the pixel with white is performed to not only the pixel corresponding to the ground color but also the pixel having the chromaticity similar to the ground color and the lightness higher than that of the ground color.

That is, the pixel having the lightness higher than that of the ground color is also replaced by the same color (white) as the ground color, which generates the problem that the beauty of the original image differs from the beauty of the recorded image recorded on the recording paper.

In the case where the ground color removing process is performed to the pixels included in the predetermined chromaticity and lightness ranges around the ground color, there is also generated the problem that the beauty before removing the ground color differs from the beauty after removing the ground color (i.e., the beauty of the original image and the beauty of the recorded image).

Furthermore, there is also a demand that the original image having the pixels with the chromaticity similar to the ground color and the lightness higher than that of the ground color is decided as a color image and the color mode is selected as the processing mode.

In view of the foregoing, an object of the present invention is to provide an image color decision apparatus and an image color decision method which can perform good color decision process on the image having the ground color.

### SUMMARY OF THE INVENTION

In order to overcome the problems described above, an image color decision apparatus according to a first aspect of the invention includes a ground color decision unit which decides presence or absence of a ground color in a target image based on image data concerning the target image, the ground color decision unit deciding the ground color when the target image has the ground color; and a target image decision unit which uses decision result of the ground color decision unit to make a color decision of the target image based on the image data concerning the target image. According to the first aspect of the present invention, when the target image has the ground color, the color decision can be made in consideration of the ground color. For example, the image color decision apparatus can decide that the monochrome image with the chromatic ground color is the monochrome image.

In the image color decision apparatus according to the first aspect of the present invention, the ground color decision unit preferably counts the number of image data constitutional units on a two-dimensional color plane in each color region, and the ground color decision unit decides the presence or absence of the ground color using the counting result. The target image decision unit preferably counts the number of image data constitutional units in each color region on the two-dimensional color plane, and the target image decision unit makes the color decision using the counting result. The counting of the ground color decision unit and the counting of the target image decision unit are preferably performed using a common circuit. Therefore, the configuration of the image color decision apparatus becomes simplified.

In the image color decision apparatus according to the first aspect of the present invention, preferably a user can set whether or not the decision result of the ground color decision unit is utilized in the color decision of the target image decision unit. Therefore, the image color decision apparatus can meet various user needs. When the user wants to decide that the chromatic ground color is the achromatic color, namely, when the user wants to decide that a monochrome original with a colored ground-color is monochrome, the user can make setting such that the color decision is made using the ground color decision result. On the other hand, when the user wants to decide that the chromatic ground color is the chromatic color, namely, when the user wants to decide that a monochrome original with the colored ground-color is color, the user can make setting such that the color decision is made without using the ground color decision result.

In the image color decision apparatus according to the first aspect of the present invention, preferably the target image decision unit performs a movement conversion process on the image data according to a positional relationship between an origin and a coordinate corresponding to the ground color decided by the ground color decision unit on the two-dimensional color plane, the target image decision unit performs a process of enlarging an achromatic region toward the movement direction, the target image decision unit counts the number of image data constitutional units for the achromatic region and a chromatic region, and the target image decision unit uses the counting result to make the color decision. Therefore, the image color decision apparatus can decide that the constitutional unit corresponding to the ground color belongs to the achromatic region through the simple process.

In the image color decision apparatus according to the first aspect of the present invention, preferably the ground color decision unit counts the number of image data constitutional units on the two-dimensional color plane in each color region, the ground color decision unit uses the counting result to decide the presence or absence of the ground color, and the ground color decision unit decides the ground color based on distribution of the constitutional units counted in the color region corresponding to the ground color on the two-dimensional color plane. Therefore, the image color decision apparatus can simply and correctly decide the ground color.

In the image color decision apparatus according to the first aspect of the present invention, preferably the ground color decision unit computes a barycentric position of a plurality of constitutional units counted in the color region corresponding to the ground color on the two-dimensional color plane, and the ground color decision unit decides the ground color based on the barycentric position. Therefore, the image color decision apparatus can correctly decide the ground color.

In the image color decision apparatus according to the first aspect of the present invention, preferably the target image decision unit averages the image data in each pixel set including a plurality of pixels, and target image decision unit makes the color decision of the image data using the averaged image data as a constitutional unit. Therefore, the influence of the false color can be eliminated.

An image color decision method according to a second aspect of the present invention includes a ground color decision process of deciding presence or absence of a ground color in a target image based on image data concerning the target image, and deciding the ground color when the target image has the ground color; and a target image decision process of using decision result of the ground color decision process to make a color decision of the target image based on the image data concerning the target image. According to the second aspect of the present invention, when the target image has the ground color, the color decision can be made in consideration of the ground color. For example, the image color decision method can decide that the monochrome image with the chromatic ground color is a monochrome image.

In order to overcome the problems described above, an image color decision apparatus according to a third aspect of the present invention includes a ground color decision unit which decides presence or absence of a ground color in a target image based on image data concerning the target image, the ground color decision unit deciding brightness and chromaticity of the ground color when the target image has the ground color; and a target image decision unit which uses decision result of the ground color decision unit to make a color decision of the target image based on the image data concerning the target image. According to the third aspect of the present invention, the color decision can be made in consideration of not only the chromaticity of the ground color but the brightness of the ground color. That is, the color decision is made while the ground color is distinguished from the color which has the chromaticity similar to the ground color and the brightness different from the ground color.

In the image color decision apparatus according to the third aspect of the present invention, preferably the target image decision unit decides that the target image is achromatic when chromaticity and brightness of the image data as a decision target correspond to chromaticity and brightness of the ground color, and the target image decision unit decides that the target image is chromatic when the chromaticity of the image data as the decision target corresponds to the chromaticity of the ground color while the brightness of the image data as the decision target differs from the brightness of the ground color. Therefore, for example, the image color decision apparatus can decide that an original in which characters having a color brighter than a ground color are described in the paper with the ground color is colored.

In the image color decision apparatus according to the third aspect of the present invention, preferably the ground color decision unit counts the number of image data constitutional units on a two-dimensional color plane in each color region, and the ground color decision unit decides the presence or absence of the ground color using the counting result, the target image decision unit counts the number of image data constitutional units in each color region on the two-dimensional color plane, and the target image decision unit makes a color decision using the counting result, and the counting of the ground color decision unit and the counting of the target image decision unit are performed using a common circuit. Therefore, the configuration of the image color decision apparatus becomes simplified.

In the image color decision apparatus according to the third aspect of the present invention, preferably a user can set whether or not the decision result of the ground color decision unit is utilized in the color decision of the target image decision unit. Therefore, the image color decision apparatus can meet various user needs. For example, when the user wants to decide that a colored ground-color is monochrome and, at the same time, when the user wants to decide that the color brighter than the ground color is colored, the user can make setting such that the color decision is made using the ground color decision result. On the other hand, when the user wants to decide that the chromatic ground color is colored, the user can make setting such that the color decision is made without using the ground color decision result.

In the image color decision apparatus according to the third aspect of the present invention, preferably the target image decision unit performs a movement conversion process on the image data according to a positional relationship between an origin and a coordinate corresponding to chromaticity of the ground color decided by the ground color decision unit on the two-dimensional color plane, the target image decision unit performs a process of enlarging an achromatic region toward the movement direction, the target image decision unit counts the number of image data constitutional units for the achromatic region and a chromatic region, and the target image decision unit uses the counting result to make the color decision. Therefore, the image color decision apparatus can decide that the constitutional unit corresponding to the ground color belongs to the achromatic region through the simple process.

In the image color decision apparatus according to the third aspect of the present invention, preferably the ground color decision unit counts the number of image data constitutional units in each color region on the two-dimensional color plane, the ground color decision unit uses the counting result to decide the presence or absence of the ground color, and the ground color decision unit decides the color of the ground color based on distribution of the constitutional units counted in the color region corresponding to the ground color on the two-dimensional color plane. Therefore, the image color decision apparatus can simply and correctly decide the ground color using the two-dimensional color plane.

In the image color decision apparatus according to the third aspect of the present invention, preferably the target image decision unit averages the image data in each pixel set including a plurality of pixels, and target image decision unit makes the color decision of the image data using the averaged image data as a constitutional unit. Therefore, the influence of the false color can be eliminated.

An image color decision method according to a fourth aspect of the present invention includes a ground color decision process of deciding presence or absence of a ground color in a target image based on image data concerning the target image, and deciding brightness and chromaticity of the ground color when the target image has the ground color; and a target image decision process of using decision result of the ground color decision process to make a color decision of the target image based on the image data concerning the target image. According to the fourth aspect of the present invention, the color decision can be made in consideration of not only the chromaticity of the ground color but the brightness of the ground color. That is, the color decision is made while the ground color is distinguished from the color which has the chromaticity similar to the ground color and the brightness different from the ground color.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 illustrates an example of a configuration of an image color decision apparatus according to a first embodiment of the present invention;

Fig. 2 illustrates an example of a color plane used in processes in a unit-image data decision unit (first and second unit-image data decision units), a unit-image data counting unit (first and second unit-image data counting units), a block decision unit (first and second block decision unit), and a block counting unit (first and second block counting units);

Fig. 3 illustrates a technique of obtaining the color plane;

Fig. 4 is a flowchart for explaining a ground color decision procedure;

Fig. 5 is a flowchart for explaining a color decision procedure;

Fig. 6 illustrates a ground color position computed by a ground color setting unit;

Fig. 7 illustrates a technique of enlarging an achromatic region when affine transform is performed on a target image based on a ground color set by a ground color setting unit;

Fig. 8 illustrates another example of the configuration of the image color decision apparatus according to the first embodiment of the present invention;

Fig. 9 illustrates an example of a configuration of an image color decision apparatus according to a second embodiment of the present invention;

Fig. 10 illustrates a ground color region;

Fig. 11 illustrates a ground color region; and

Fig. 12 illustrates another example of the configuration of the image color decision apparatus according to the second embodiment of the present invention.

### DETAILED DESCRIPTION OF PREFERRED EMBODIMENTS

### (First Embodiment)

A first embodiment of the present invention will be described in detail with reference to the drawings. Common description will appropriately be made for a common configuration between first and second embodiments.

### 1. Configuration of Image Color Decision Apparatus

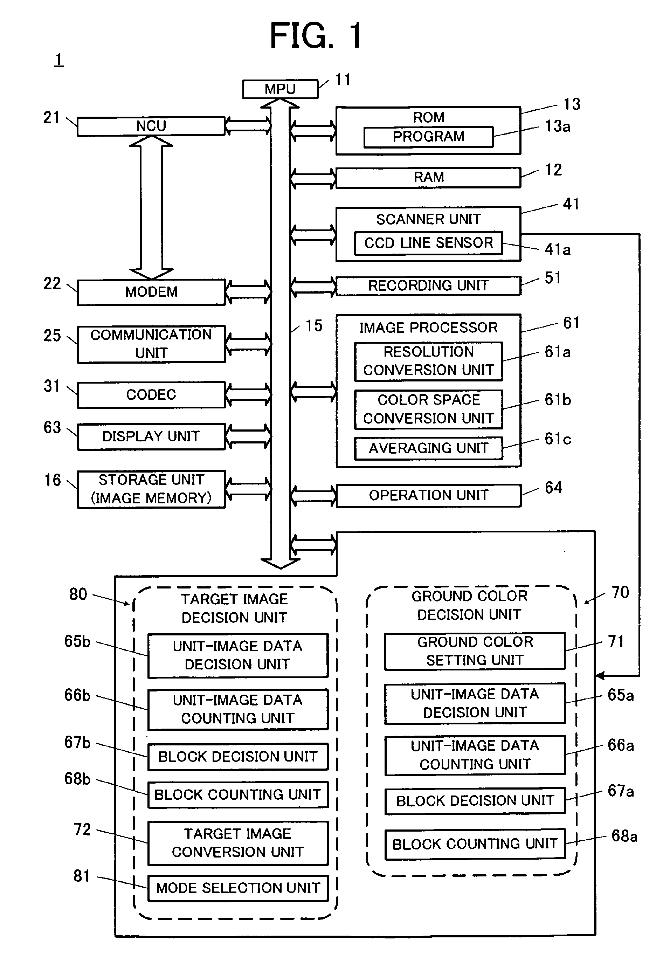

Fig. 1 illustrates an example of a configuration of an image color decision apparatus 1 according to the first embodiment. The image color decision apparatus 1 is a multifunction peripheral in which functions of a scanner, a printer, a copying machine, and a facsimile are combined. The image color decision apparatus 1 can detect a ground color of an original scanned by a scanner unit 41.

Referring to Fig. 1, the image color decision apparatus 1 mainly includes the scanner unit 41, a recording unit 51, a ground color decision unit 70, and a target image decision unit 80. As used herein, the "ground color" shall mean a background color existing in an original.

A modem 22 converts digital data into a transmitting speech signal, and the modem 22 converts a speech signal transmitted from the outside of the image color decision apparatus 1 and received by the image color decision apparatus 1 into the digital data. An NCU 21 is a device required to connect the image color decision apparatus 1 to a public telephone switched network, and the NCU 21 performs sending and receiving and dial control. A communication unit 25 is a LAN interface which conducts data communication with an information processing apparatus (not shown) connected through a network.

A CODEC 31 is used in a reversible process of compressing an image transmitted by facsimile communication. The CODEC 31 encodes the image which is scanned from the original with the scanner unit 41 and binarized in an image processor 61. The encoded image is stored in an image memory 16. The CODEC 31 decodes facsimile data (binary data) transmitted from another image color decision apparatus. The decoded binary data is supplied to the recording unit 51, and a recording process is performed.

One of MH (Modified Huffman), MR (Modified Read), MMR (Modified MR), and JBIG (Joint Bi-level Image Experts Group) is adopted in the case where the CODEC 31 encodes binary data. The CODEC 31 also encodes multi-value data. For example, the multi-value data is encoded by JPEG (Joint Photographic Experts Group).

The scanner unit 41 is a scanning unit which scans an original color image. The image data (scanned image data) scanned by the scanner unit 41 is compressed by, e.g., JPEG using the CODEC 31, and the compressed image data is stored in the image memory 16.

The scanner unit 41 scans the image drawn on the original with a CCD line sensor 41a to be described later and generates the image data concerning the image. The scanner unit 41 scans the image drawn on the original by an ADF (Automatic Document Feeder) method or an FBS (Flat Bed Scanner) method. The ADF method means a method in which the original is fed and scanned one by one from a bundle of plural originals, and the FBS method means a method of scanning the original placed on a contact glass. Examples of the ADF method include a method (sheet through method) in which a moving original is scanned with a static scanning optical system and a method in which a static original is scanned with a moving scanning optical system. In the case where the latter is adopted, the scanner unit 41 repeats the following scanning procedure. That is, the original is caused to stand still on the contact glass, the original is scanned with the moving scanning optical system, and the scanned original is discharged.

In scanning the original with the scanning optical system which introduces light from the original to the CCD line sensor 41a, the CCD line sensor 41a repeats the scanning at constant intervals to generate image data expressed by an RGB color space, i.e., the image data having pieces of color component data of R (Red), G (Green), and B (Blue). A scanning speed of the scanning optical system is set based on the resolution in a sub-scanning direction of the image data generated by the CCD line sensor 41a. Specifically, the scanning speed of the scanning optical system is reduced as the resolution in the sub-scanning direction is increased, and the scanning speed of the scanning optical system is increased as the resolution in the sub-scanning direction is decreased. The "scanning speed" means a relative moving speed between the original and the scanning optical system.

The recording unit 51 is an image forming unit in which a toner image is recorded on recording paper by an electrophotography method based on an electrostatic latent image. For example, the recording unit 51 forms the toner image on a photoconductive drum (not shown) based on the scanned image data, and the recording unit 51 transfers the toner image onto the recording paper. Thus, the recording unit 51 is used as a processing unit which performs a recording process on an image of a recording target.

The image processor 61 is a processing unit which performs predetermined image processing on the image data. For example, the image processor 61 performs a gamma correction process on the image data. The image processor 61 includes a resolution conversion unit 61a, and the resolution conversion unit 61a converts the resolution of the image data. The image processor 61 includes a color space conversion unit 61b, and the color space conversion unit 61b converts the color space of the image data from a first color space into a second color space. For example, the first color space is the RGB color space and the second color space is an Lab (lightness L and chromaticities a and b) color space. The image processing may be realized in a software manner using an MPU 11 based on a program 13a stored in a ROM 13.

A display unit 63 is formed by a so-called liquid crystal display, and the display unit 63 has a function of "touch panel" in which a finger or a dedicated pen can come into contact with a screen to specify a position on the screen. Accordingly, a user of the image color decision apparatus 1 (hereinafter simply referred to as "user") uses the "touch panel" function of the display unit 63 to provide an instruction based on contents displayed on the display unit 63, which causes the image color decision apparatus 1 to perform a predetermined operation. Thus, the display unit 63 is also used as an input unit.

An operation unit 64 is an input unit constituted by a so-called key pad. The user can cause the image color decision apparatus 1 to perform a predetermined operation by performing input operation based on display contents on the display unit 63.

The ground color decision unit 70 decides the ground color of the target image based on the image data obtained by scanning the original with the scanner unit 41 or the image data (hereinafter also referred to as "image data concerning target image") stored in the image memory 16. That is, the ground color decision unit 70 detects (decides) the presence or absence of the ground color of the target image, and the ground color decision unit 70 detects (decides) the color (coordinate on two-dimensional color plane) of the ground color when the target image is the image (ground color original) having the ground color.

Using the decision result of the ground color decision unit 70, the target image decision unit 80 makes color decision of the target image based on the image data concerning the target image. The target image decision unit 80 also selects a processing mode based on the result of the color decision. The processing mode is performed in the processing unit such as the recording unit 51 and the image processor 61. For example, the target image decision unit 80 is configured to select a color mode and a monochrome mode as the processing mode. A color process can be performed in the color mode, and a monochrome process can be performed in the monochrome mode. The detailed configurations of the ground color decision unit 70 and target image decision unit 80 will be described later.

The ground color decision unit 70 counts the number of constitutional units (pieces of unit image data) of the image data in each color region on a two-dimensional plane, and the ground color decision unit 70 uses the counting result to decide the presence or absence of the ground color. That is, the ground color decision unit 70 counts the constitutional unit in each color region formed on the two-dimensional color plane, and the ground color decision unit 70 decides the presence or absence of the ground color based on whether or not constitutional unit distribution exists while being biased in a particular color region. When the constitutional unit distribution exists while being biased in a particular color region, the ground color decision unit 70 decides that the ground color of the color corresponding to the particular color region exists. When the constitutional unit distribution does not exist while being biased in the particular color region, namely when the constitutional unit distribution is evenly dispersed in the plural color regions, the ground color decision unit 70 decides that the ground color does not exist. When the constitutional unit distribution exists while being biased in the achromatic region, the ground color decision unit 70 also decides that the ground color does not exist.

The target image decision unit 80 counts the number of constitutional units (pieces of unit image data) of the image data in each color region on the two-dimensional color plane, and the target image decision unit 80 uses the counting result to make the color decision. That is, the target image decision unit 80 counts the constitutional unit in each color region formed on the two-dimensional color plane, and the target image decision unit 80 uses the counting result to make the color decision of the target image. The color region is divided into an achromatic region (region near origin) and a chromatic region (region except achromatic region), and the decision whether the target image is the color image or the monochrome image can be made based on the constitutional unit distributions in the achromatic region and chromatic region. For example, in the case where a large number of constitutional units exist in the achromatic region while a small number of constitutional units exist in the chromatic region, it can be decided that the target image is the monochrome image. On the other hand, in the case where a large number of constitutional units exist in the chromatic region, it can be decided that the target image is the color image.

Thus, although the ground color decision unit 70 and the target image decision unit 80 perform the different processes, performing the counting process in each color region is common to the ground color decision unit 70 and the target image decision unit 80. Therefore, in the first embodiment, the counting processes are performed by the ground color decision unit 70 and the target image decision unit 80 using a common circuit. This enables the configuration of the image color decision apparatus 1 to be simplified.

The RAM (Random Access Memory) 12 and the image memory 16 are volatile memories (storage unit) in which data is freely read and written. The ROM (Read Only Memory) 13 is a read only memory. The MPU (Micro Processing Unit) 11 performs control according to the program 13a stored in the ROM 13. The MPU 11, the ROM 13, and the recording unit 51 are electrically connected to one another through a signal line (bus) 15. Accordingly, the MPU 11 can cause the recording unit 51 to perform the recording process at predetermined timing.

The CODEC 31 which acts as a compression and expansion unit obtains the image data to generate the compressed image data, and the CODEC 31 accumulates the compressed image data in the image memory 16.

As described above, the processing mode of the image color decision apparatus 1 includes the "monochrome mode" and the "color mode".

In performing the scanning in the "color mode", the color space conversion unit 61b converts multiple tone RGB image data inputted from the resolution conversion unit 61a into multiple tone YCC image data, and the CODEC 31 compresses the multiple tone YCC image data by JPEG or the like to accumulate the compressed data in the image memory 16.

In performing the copying in the "color mode", the color space conversion unit 61b converts the multiple tone RGB image data inputted from the resolution conversion unit 61a into multiple tone Lab image data (image data expressed by an L*a*b*color space), and the color space conversion unit 61b further converts the multiple tone Lab image data into multiple tone CMYK image data (image data expressed by a CMYK color space). The multiple tone CMYK image data is binarized into two-tone CMYK image data. The recording unit 51 obtains the two-tone CMYK image data, and the recording unit 51 forms the color image on the recording medium using necessary one of "Y", "M", "C", and "K" image forming engines (four-color image forming engine). As used herein, "using necessary one of "Y", "M", "C", and "K" image forming engines (four-color image forming engine)" shall mean that only the necessary image forming engine may be operated in order to express the color included in the image. For example, only the "Y" image forming engine may be operated when a color segmentation of the color included in the image has only "Y", and only the "Y" and "M" image forming engines may be operated when the color segmentation of the color included in the image has only "R".

In performing the scanning in the "monochrome mode" when the original is a gray-scale original (such as a black-and-white photograph original), the color space conversion unit 61b converts the multiple tone RGB image data inputted from the resolution conversion unit 61a into the multiple tone YCbCr image data, and the CODEC 31 compresses a luminance component Y of the multiple tone YCbCr image data by JPEG to accumulate the compressed data in the image memory 16.

Alternatively, in performing the scanning in the "monochrome mode" when the original is a gray-scale original, the color space conversion unit 61b converts the multiple tone RGB image data inputted from the resolution conversion unit 61a into the multiple tone YCbCr image data. The luminance component Y of the multiple tone YCbCr image data is binarized into a two-tone luminance component Y by an ordered dither method or the like, and the CODEC 31 compresses the two-tone luminance component Y by JBIG to accumulate the compressed data in the image memory 16.

On the other hand, in performing the scanning in the "monochrome mode" when the original is a black-and-white original (such as black-and-white character original), the color space conversion unit 61b converts the multiple tone RGB image data inputted from the resolution conversion unit 61a into the multiple tone YCC image data. The luminance component Y of the multiple tone YCC image data is binarized into the two-tone luminance component Y by a simple binarization method or the like, and the CODEC 31 compresses the two-tone luminance component Y by JBIG to accumulate the compressed data in the image memory 16.

In making a copy in the "monochrome mode" when the original is the gray-scale original (such as black-and-white photograph original), the color space conversion unit 61b converts the multiple tone RGB image data inputted from the resolution conversion unit 61a into the multiple tone YCbCr image data. The luminance component Y of the multiple tone YCbCr image data is binarized into the two-tone luminance component Y by the ordered dither method or an error diffusion method. The recording unit 51 obtains the two-tone luminance component Y, and the recording unit 51 forms the monochrome image on the recording medium using the "K" image forming engine.

On the other hand, in making a copy in the "monochrome mode" when the original is the black-and-white original (such as black-and-white character original), the color space conversion unit 61b converts the multiple tone RGB image data inputted from the resolution conversion unit 61a into the multiple tone YCbCr image data. The luminance component Y of the multiple tone YCbCr image data is binarized into the two-tone luminance component Y by the error diffusion method, the simple binarization method or the like. The recording unit 51 obtains the two-tone luminance component Y, and the recording unit 51 forms the monochrome image on the recording medium using the "K" image forming engine.

In making a copy of the gray-scale original, desirably the binarization is performed while emphasis is put on gray-scale reproducibility rather than in making a copy of the black-and-white original. In making a copy of the black-and-white original, desirably the binarization is performed while emphasis is put on character reproducibility rather than in making a copy of the gray-scale original.

### 2. Configurations of Ground Color Decision Unit and Target Image Decision Unit

Configurations of the ground color decision unit 70 and target image decision unit 80 will be described below. Referring to Fig. 1, the ground color decision function of the ground color decision unit 70 is realized by a unit-image data decision unit 65a, a unit-image data counting unit 66a, a block decision unit 67a, a block counting unit 68a, and a ground color setting unit 71.

Referring to Fig. 1, the color decision function of the target image decision unit 80 is realized by a unit-image data decision unit 65b, a unit-image data counting unit 66b, a block decision unit 67b, a block counting unit 68b, a target image conversion unit 72, and a mode selection unit 81.

The unit-image data decision unit 65b, unit-image data counting unit 66b, block decision unit 67b, and block counting unit 68b of the target image decision unit 80 realize the functions similar to those of the corresponding unit-image data decision unit 65a, unit-image data counting unit 66a, block decision unit 67a, and block counting unit 68a of the ground color decision unit 70.

In the first embodiment, each of the unit-image data decision unit 65 (65a, 65b), unit-image data counting unit 66 (66a, 66b), block decision unit 67 (67a, 67b), and block counting unit 68 (68a, 68b) performs the counting process and the decision process not based on pixel data constituting the target image but based on unit image data (constitutional unit) obtained according to the target image.

The unit image data is a pixel group into which the target image is divided in each n (n is a natural number) adjacent pixels, and an average value of pixels included in the corresponding pixel group is used as the value of the unit image data.

For example, each unit image data is formed by the pixel groups into which the target image is divided by two pixels long (in the sub-scanning direction) and two pixels wide (in the main scanning direction) (i.e., n="4"), and the target image color space is RGB. Then, R values, G values, and B values of the four pixels included in the corresponding pixel group are averaged and used as the value (R, G, B) of each unit image data. Thus, in the first embodiment, the process of generating the unit image data is realized as the averaging process of averaging the predetermined number of adjacent pieces of pixel data. The averaging process is performed by an averaging unit 61c of the image processor 61.

In the first embodiment, the unit-image data decision unit 65, the unit-image data counting unit 66, the block decision unit 67, and the block counting unit 68 perform the processes on the image data on which affine transform is performed on a color plane H of the two-dimensional color plane.

In the following description, first the color plane H will be described, and then the unit-image data decision unit 65, unit-image data counting unit 66, block decision unit 67, block counting unit 68, ground color setting unit 71, target image conversion unit 72, and mode selection unit 81 which are components of the ground color decision unit 70 and target image decision unit 80 will be described.

### 2.1. Configuration of Color Plane

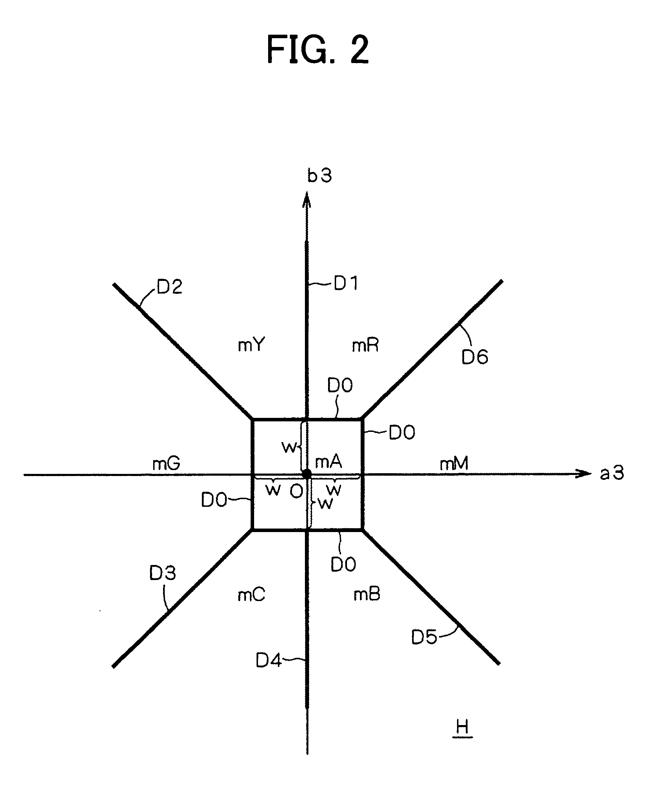

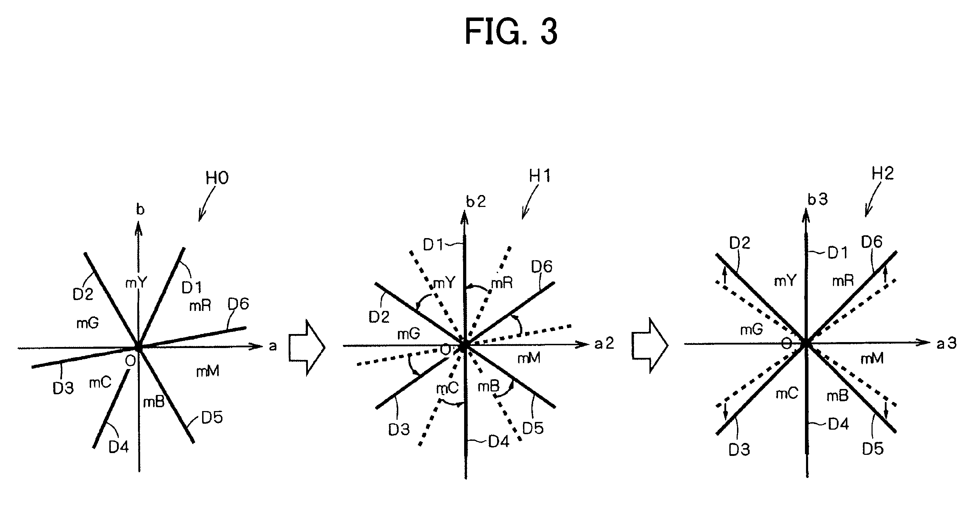

Fig. 2 illustrates an example of a color plane H. Fig. 3 illustrates a technique of obtaining the color plane H. The color plane H is obtained by performing the affine transform such as rotational transform and scaling transform on a chromaticity diagram of a general Lab colorimetric system. Accordingly, the color plane H has the same characteristics as the chromaticity diagram with respect to the hue and chroma. That is, colors are radially disposed while centered on an origin O. The hue is indicated by an orientation from the origin O, and the chroma is indicated by a distance from the origin O.

Referring to Fig. 2, the color plane H is formed by a Cartesian coordinate system having both a horizontal axis a3 and a vertical axis b3, and each point on the color plane H is expressed by a coordinate (a3, b3). Accordingly, the coordinate (a3, b3) is used as a parameter (hereinafter referred to as "color parameter") with respect to the hue and chroma. Where the unit image data is positioned on the color plane H is determined by the chromaticity value (a, b) possessed by each unit image data.

It is known that the origin O of the color plane H and a neighborhood of the origin O substantially become the achromatic color. In the first embodiment, a chroma boundary line D0 indicating a boundary between the chromatic color and the achromatic color is set near the origin O of the color plane H. Therefore, the inside of the chroma boundary line D0 becomes an achromatic region mA indicating the achromatic color. The outside of the chroma boundary line D0 becomes a chromatic region indicating the chromatic color.

Six hue boundary lines D1 to D6 indicating the boundary of the hue are set in the chromatic region outside the chroma boundary line D0. Each of the hue boundary lines D1 to D6 is a semi-straight line radially extending from the origin side. The chromatic region is divided into plural (six in the first embodiment) color regions mC, mM, mY, mR, mG, and mB by the hue boundary lines D1 to D6 and the chroma boundary line D0.

Referring to Fig. 2, the hue boundary line D1 constitutes the boundary between the color region mR and the color region mY. The hue boundary line D2 constitutes the boundary between the color region mY and the color region mG. The hue boundary line D3 constitutes the boundary between the color region mG and the color region mC. The hue boundary line D4 constitutes the boundary between the color region mC and the color region mB. The hue boundary line D5 constitutes the boundary between the color region mB and the color region mM. The hue boundary line D6 constitutes the boundary between the color region mM and the color region mR.

The color regions mC, mM, mY, mR, mG, and mY correspond to six decision colors C (Cyan), M (Magenta), Y (Yellow), R (Red), G (Green), and B (Blue).

The ground color decision and color decision in the first embodiment are made based on the position of the coordinate (a3, b3) of each unit image data on the color plane H. For example, when the coordinate (a3, b3) of the unit image data exists in the achromatic region mA, it is decided that the color of the unit image data is the achromatic color. On the other hand, when the coordinate (a3, b3) of the unit image data exists in one of the color regions mC, mM, mY, mR, mG, and mB, it is decided that the color of the unit image data is the chromatic colors C, M, Y, R, G, and B having the hue and chroma according to the color region.

The color plane H is obtained through the following procedure. The hue boundary lines D1 to D6 are set to the color plane H0 of the Lab colorimetric system (see left of Fig. 3). The color plane H0 corresponds to the chromaticity diagram of a general Lab colorimetric system, and the color plane H0 has the Cartesian two-dimensional coordinate system where a is the horizontal axis and b is the vertical axis. The hue boundary lines D1 to D6 may be set based on human sense.

The pair of hue boundary lines which is substantially symmetrical in relation to the origin O is set so as to be a straight line. However, the pair of hue boundary lines is not limited thereto. In the first embodiment, the pair of hue boundary lines sandwiching the origin O therebetween becomes the straight line, so that computation cost for the decision process can be reduced.

Then, the rotational transform is performed on the whole hue around the origin O such that the hue boundary lines D1 and D4 near the vertical axis b of the color plane H0 coincide with the vertical axis b. Therefore, the color plane H1 is obtained (see center of Fig. 3). The color plane H1 has the Cartesian two-dimensional coordinate system where a2 is the horizontal axis and b2 is the vertical axis.

Then, a transform in which the enlargement and contraction are performed in the vertical axis and horizontal axis directions with different rates on the whole hue such that the hue boundary lines D2, D3, D5, and D6 are inclined by 45 degrees relative to each of the horizontal axis a2 and vertical axis b2. Therefore, the color plane H2 is obtained (see right side in Fig. 3). The color plane H2 has the Cartesian two-dimensional coordinate system where a3 is the horizontal axis and b3 is the vertical axis. The chroma boundary line D0 is further set to the color plane H2, which allows the color plane H of Fig. 2 to be obtained.

Alternatively, using the value of the unit image data directly expressed by Lab, the color decision of the unit image data is made based on which position the coordinate (a, b) indicated by the chromaticity exists at in the color plane H0 corresponding to the chromaticity diagram of the Lab colorimetric system. In this case, it is not necessary to determine the color parameter in addition to the chromaticity.

However, in the color plane H0, sometimes gradients of the hue boundary lines D1 to D6 become irrational numbers. In such cases, because irrational computation is required with an inverse trigonometric function to decide the color of the unit image data, sometimes decision efficiency becomes worsened. Therefore, in the processes of the unit-image data decision unit 65, unit-image data counting unit 66, block decision unit 67, and block counting unit 68, at least the affine transform such as the rotational transform is performed on the image data on the color plane H0 to use the color plane H in which the gradients of the hue boundary lines D1 to D6 become rational numbers.

### 2.2. Components of Ground Color Decision Unit and Target Image Decision Unit

Components of the ground color decision unit 70 and target image decision unit 80 will be described below. The unit-image data decision unit 65 (65a and 65b) performs the decision process on the target image in which the image processor 61 converts the RGB color space into the Lab color space. That is, the unit-image data decision unit 65 decides whether the unit image data obtained based on the target image belongs to the achromatic region mA or the color regions mC, mM, mY, mR, mG, and mB corresponding to a particular chromatic color in the color plane H.

The unit-image data counting unit 66 (66a and 66b) divides the target image into plural blocks formed by 900 pieces of unit image data 30 long by 30 wide. The unit-image data counting unit 66 counts the number of pieces of unit image data belonging to each of the plural color regions mC, mM, mY, mR, mG, and mB and the achromatic region mA in each block based on the decision result of the unit-image data decision unit 65.

For example, the unit-image data counting unit 66 counts the number of pieces of unit image data belonging to the color region mC in the 900 pieces of unit image data included in the blocks, and the unit-image data counting unit 66 stores the counting result in the RAM 12. Similarly, the unit-image data counting unit 66 counts the number of pieces of unit image data belonging to each of the color regions mM, mY, mR, mG, and mB and the achromatic region mA, and the unit-image data counting unit 66 stores the counting result in the RAM 12.

The block decision unit 67 (67a and 67b) decides the color included in each block based on the counting result of the unit image data counting unit 66. That is, the block decision unit 67 decides the color included in each block by comparing the counting value of each of the color regions mC, mM, mY, mR, mG, and mB and the achromatic region mA to a reference value for existence confirmation.

For example, in the case where only the counting values of the color regions mC and mM for a certain block exceed the reference value for existence confirmation, the block decision unit 67 decides that cyan C and magenta M are included in the block. In the case where only the counting value of the color region mA for a certain block exceeds the reference value for existence confirmation, the block decision unit 67 decides that only the achromatic color is included in the block.

The threshold (reference value for existence confirmation) used to confirm the existence of the unit image data may have a different value in each of the color region mC, mM, mY, mR, mG, and mB and the achromatic region mA, or the threshold may have the same value.

The block counting unit 68 (68a and 68b) computes a block counting value in each of the color regions mC, mM, mY, mR, mG, and mB and the achromatic region mA based on the decision result of each block, which is performed by the block decision unit 67. That is, the block counting unit 68 adds the counting values (block counting values) of the color region and achromatic region corresponding to the colors. The block decision unit 67 decides that the colors are included in each block. For example, in the case where the block decision unit 67 decides that only cyan C and magenta M are included in a certain block, the block counting unit 68 adds the counting values of the color regions mC and mM as the counting process concerning the block. In the case where the block decision unit 67 decides that only the achromatic color is included in a certain block, the block counting unit 68 adds the counting value of the achromatic region mA as the counting process concerning the block. Then, the block counting unit 68 stores the counting result (block counting value) in each of the plural color regions mC, mM, mY, mR, mG, and mB and the achromatic region mA in the RAM 12.

The ground color setting unit 71 sets the target image ground color based on the counting result of the block counting unit 68a when the unit-image data decision unit 65a, the unit-image data counting unit 66a, the block decision unit 67a, and the block counting unit 68a perform the processes on the target image. For example, in the case where one or two block counting values counted in each of the plural color regions mC, mM, mY, mR, mG, and mB and the achromatic region mA are not lower than a ground color reference value, the ground color setting unit 71 decides that the ground color exists in the color region whose block counting value is not lower than the ground color reference value, and the ground color setting unit 71 selects the corresponding color region.

That is, the ground color setting unit 71 decides the presence or absence of the ground color based on the block counting value of each color region and the ground color reference value, and the ground color setting unit 71 decides the color region corresponding to the ground color when deciding that the ground color exists in the color region.

The ground color setting unit 71 decides that the ground color exists, when the color region whose block counting value exceeds the ground color reference value exists. The ground color setting unit 71 decides that the color region is one which corresponds to the ground color. In the case of the plural ground color reference values, when not only one color region exceeds a first ground color reference value but also two color regions exceed a second ground color reference value, the ground color setting unit 71 decides that the ground color exists.

On the basis of each unit image data included in the color region, the ground color setting unit 71 sets the ground color for the color region selected according to the counting result of the block counting unit 68. For example, in the setting of the ground color, a ground color position is computed for the plural pieces of unit image data included in the selected color region based on a barycentric position of the plural pieces of unit image data. Therefore, the detection of a wrong ground color can further be prevented.

The technique of computing the ground color position is not limited to the above technique. For example, the ground color position may be computed based on a maximum value and a minimum value of the unit image data included in the selected color region (for example, an average value of the maximum value and the minimum value) .

The target image conversion unit 72 performs the affine transform on the image data (unit image data) on the color plane H based on the ground color set by the ground color setting unit 71. Specifically, the target image conversion unit 72 translates image data to be the decision target such that the ground color position (barycentric position) computed by the ground color setting unit 71 becomes the origin of the color plane H formed by the plural color regions mC, mM, mY, mR, mG, and mB and the achromatic region mA.

The mode selection unit 81 makes the color decision based on the image data on which the affine transform is performed on the color plane H while the ground color position is set to the origin of the color plane H, and the mode selection unit 81 selects the processing mode based on the color decision result. That is, when the unit-image data decision unit 65b, the unit-image data counting unit 66b, the block decision unit 67b, and the block counting unit 68b perform the processes on the image data on which the target image conversion unit 72 performs the affine transform, the mode selection unit 81 makes the color decision based on the counting result of the block counting unit 68b, and the mode selection unit 81 selects the processing mode based on the color decision result.

For example, in the case where the block counting value of the color region mC is not lower than a predetermined threshold, the mode selection unit 81 decides that the target image is the color image, and the mode selection unit 81 selects the "color mode" as the processing mode. Similarly, in the case where one of the block counting values of the color regions mM, mY, mR, mG, and mB is not lower than the predetermined threshold, the mode selection unit 81 decides that the target image is the color image, and the mode selection unit 81 selects the "color mode" as the processing mode.

On the other hand, any of the block counting values of the color regions mC, mM, mY, mR, mG, and mB is lower than the predetermined threshold, the mode selection unit 81 decides that the target image is the monochrome image, and the mode selection unit 81 selects the "monochrome mode" as the processing mode.

The processing unit such as the recording unit 51 and the image processor 61 performs a predetermined process on the image data concerning the target image based on the processing mode (color mode or monochrome mode) selected by the mode selection unit 81.

For example, in the case where the mode selection unit 81 selects the monochrome mode, the recording unit 51 records the monochrome-converted target image on the recording paper. In the case where the mode selection unit 81 selects the color mode, the CODEC 31 compresses the target image in the form of the color data by JPEG.

The threshold used in the color decision may have a different value in each of the color regions mC, mM, mY, mR, mG, and mB and the achromatic region mA, or the threshold may have the same value.

### 3. Procedure of Ground Color Decision and Color Decision

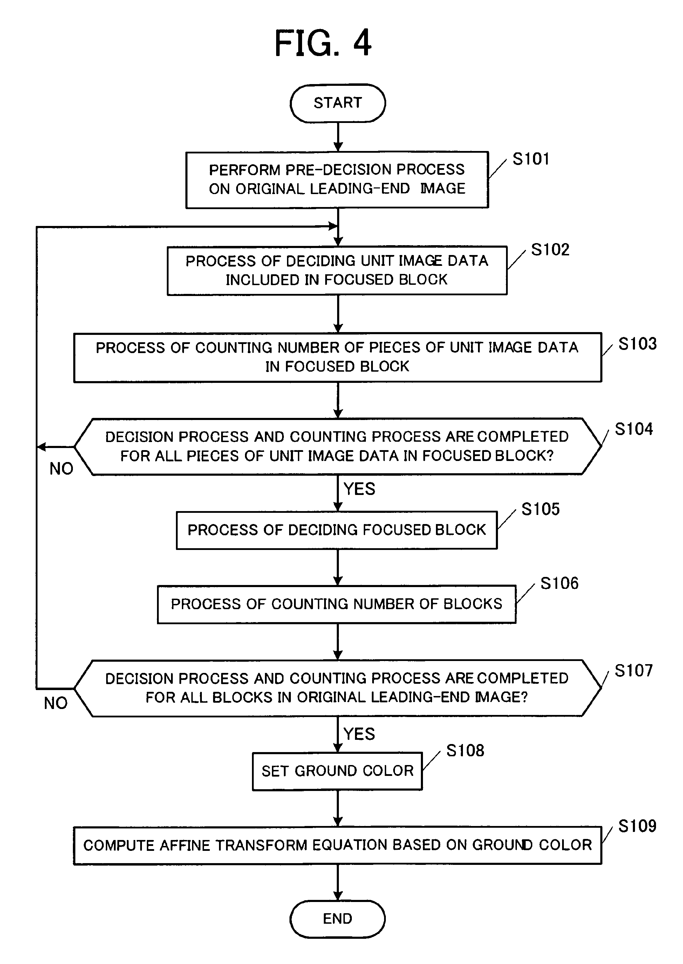

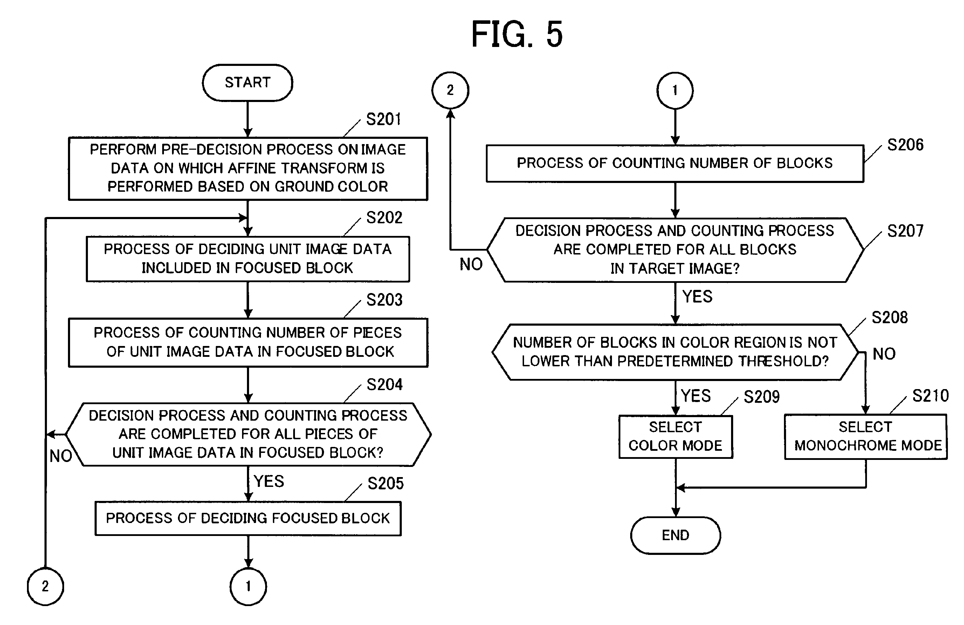

Fig. 4 is a flowchart for explaining a ground color decision procedure. Fig. 5 is a flowchart for explaining a color decision procedure. The ground color decision procedure will be described first, and then the color decision will be described.

### 3.1. Procedure of Ground Color Decision

The target image ground color decision procedure will be described below. Referring to Fig. 4, in Step S101, prior to the ground color decision, a pre-decision process is performed on the image (hereinafter also referred to as "original leading-end image") of predetermined lines (for example, tens to hundreds lines) from a leading end of the original in the target image.

For example, in the pre-decision process of Step S101, the image processor 61 (image processor 161) performs the process (averaging process) of generating the unit image data from the RGB color space target image. The image processor 61 (image processor 161) performs a gamma correction process on the generated unit image data. The image processor 61 (image processor 161) converts the color space of the unit image data on which the gamma correction process is performed from RGB to Lab (lightness L and chromaticities a and b).

The pixel data on which the averaging process is not performed may be used as the unit image data. However, when not the pixel data but the average value in each pixel set is used as the unit image data, a false color caused by a fine mechanical error of the line sensor etc. in the scanner unit 41 (scanner unit 141) or a false color caused by a variable magnification rate of the copy function can be corrected, and the accuracy of subsequent decisions can preferably be improved.

That is, when the unit data is formed by average values Ravg, Gavg, and Bavg of the color component data in each pixel set, the influence of the false color caused by providing the R, G, and B scanning lines at several-micrometer line pitches in the CCD line sensor 41a (CCD line sensor 141a) can be eliminated to accurately make the decision in the unit-image data decision unit 65 (first unit-image data decision unit 165).

The false color frequently becomes a trouble in performing the variable magnification copy. When the line pitch of the R, G, and B scanning lines in the CCD line sensor 41a (CCD line sensor 141a) corresponds to an integral multiple of the scanning pitch in the sub-scanning direction, the false color can be prevented by delaying the scanning timing in the subsequent scanning line from the preceding scanning line. However, even if the relationship of "integral multiple" holds in performing the same magnification copy, the relationship of "integral multiple" does not always hold in performing the variable magnification copy.

For example, in performing the same magnification copy, it is assumed that 600 dpi is the resolution in the sub-scanning direction and the line pitch is four times the scanning pitch. In this case, in performing the same magnification copy, the scanning timing in the subsequent scanning line can be delayed by four periods from the preceding scanning line to prevent the false color. However, in performing 70% reduced scale copy, the resolution in the sub-scanning direction becomes 420 dpi and the line pitch is 2.8 times the scanning pitch. Therefore, even if the scanning timing in the subsequent scanning line is delayed by three periods from the preceding scanning line, a difference in 0.2-time scanning position of the scanning pitch is generated between the preceding scanning line and the subsequent scanning line, which causes the false color.

Additionally, sometimes the false color is caused by the mechanical shift in forming positions of the R, G, and B scanning lines of the CCD line sensor 41a (CCD line sensor 141a).

The size of the pixel set should be determined according to the line pitch, the variable magnification rate and the like, the above "adjacent four pixels two long by two wide" is illustrated only by way of example.

For example, in order to eliminate the influence of the false color in performing the variable magnification copy, it is effective that the number of pixels is increased in the sub-scanning direction of the pixel set as the "shift of scanning position" is increased. However, because the "shift of scanning position" is determined by the variable magnification rate, a table in which a relationship between the variable magnification rate and the number of pixels in the sub-scanning direction of the pixel set is described is previously prepared in the ROM 13 (ROM 113), and desirably the number of pixels in the sub-scanning direction of the pixel set is determined according to the specified variable magnification rate by referring to the table.

The averaging unit 61c (averaging unit 161c) averages the image data on which the resolution conversion unit 61a (resolution conversion unit 161a) does not perform the resolution conversion, so that there is generated no particular problem even if the number of pixels in the main-scanning direction of the pixel set is kept constant.

Then, for the blocks divided in a predetermined number (for example, 30 x 30 = 900) by unit-image data counting units 66a (first unit-image data counting units 166a), the unit-image data decision unit 65a (first unit-image data decision unit 165a) decides whether the unit image data included in the focused block belongs to the plural color regions mC, mM, mY, mR, mG, and mB or the achromatic region mA (S102). Then, the unit-image data counting unit 66a (first unit-image data counting unit 166a) counts the number of pieces of unit image data belonging to each of the color regions mC, mM, mY, mR, mG, and mB and the achromatic region mA based on the decision result of the unit-image data decision unit 65a (first unit-image data decision unit 165a) (S103). The unit-image data decision process and the unit-image data counting process of Steps S102 and S103 are performed on all the pieces of unit image data in the focused block (S104).

After the decision process and the counting process are performed on all the pieces of unit image data in the focused block, the block decision unit 67a (first block decision unit 167a) performs the decision process on the focused block based on the counting result of the unit-image data counting unit 66a (first unit-image data counting unit 166a). That is, the block decision unit 67a (block decision unit 167a) performs the decision process of the color included in the focused block (S105).

Then, the block counting unit 68a (first block counting unit 168a) adds the block counting values of the necessary color region mC, mM, mY, mR, mG, and mB and achromatic region mA based on the decision result of the block decision unit 67a (first block decision unit 167a) (S106).

The block decision process and the block counting process of Steps S105 and S106 are performed on all the blocks in the original leading-end image (S107).

Then, on the basis of the block counting value of each of the plural color regions mC, mM, mY, mR, mG, and mB and the achromatic region mA, which is counted by the block counting unit 68a (first block counting unit 168a), the ground color setting unit 71 (ground color setting unit 171) sets the ground color and computes the ground color position (S108). That is, the ground color setting unit 71 (ground color setting unit 171) sets the ground color based on the block counting value, and the ground color setting unit 71 computes the barycentric position (ground color position) based on the ground color region P1. Then, an affine transform equation in the color plane H is computed based on the ground color set in Step S108 (S109), and the ground color decision process is ended.

Thus, in the target image ground color decision and target image color decision in the first embodiment, the decision and counting can be performed in each block. Therefore, the wrong ground color detection caused by buildup of the wrong chromatic and achromatic decisions can be prevented, and the performance of the target image color decision based on the wrong ground color can be prevented. The downsizing of the counter can be achieved. The ground color can be set based on the unit image data included in the selected color region. Therefore, the detection of the wrong ground color can further be prevented.

In the first embodiment, the color regions mC, mM, mY, mR, mG, and mB are selected based on the counting result of the block counting unit 68a (first block counting unit 168a), and the ground color is set based on the selected color region. Therefore, the detection of the wrong ground color can further be prevented.

### 3.2. Color Decision Procedure

The target image color decision will be described below. Referring to Fig. 5, in Step S201, prior to the color decision, a pre-decision process is performed on the image data on which the affine transform is performed based on the affine transform equation computed in the ground color decision process.

For example, in the pre-decision process of Step S201, similarly to Step S101 of Fig. 4, the image processor 61 (image processor 161) performs the process (averaging process) of generating the unit image data from the RGB color space target image. The image processor 61 (image processor 161) also performs the gamma correction process on the generated unit image data. Moreover, the image processor 61 (image processor 161) converts the color space of the unit image data on which the gamma correction process is performed from RGB to Lab (lightness L and chromaticities a and b).

The target image pixel data may directly be used as the unit image data without performing the averaging process. However, as described above, preferably not the pixel data but the average value of the pixels included in the pixel group is used as the unit image data.

Then, the unit-image data decision unit 65b (first unit-image data decision unit 165b) decides whether the unit image data included in the focused block belongs to the plural color regions mC, mM, mY, mR, mG, and mB, or the achromatic region mA (S202). Then, the unit-image data counting unit 66b (first unit-image data counting unit 166b) counts the number of pieces of unit image data belonging to each of the color regions mC, mM, mY, mR, mG, and mB and the achromatic region mA based on the decision result of the unit image data decision unit 65b (first unit-image data decision unit 165b) (S203). The decision process and counting process of Steps S202 and S203 are performed on all the pieces of unit image data in the focused block (S204).

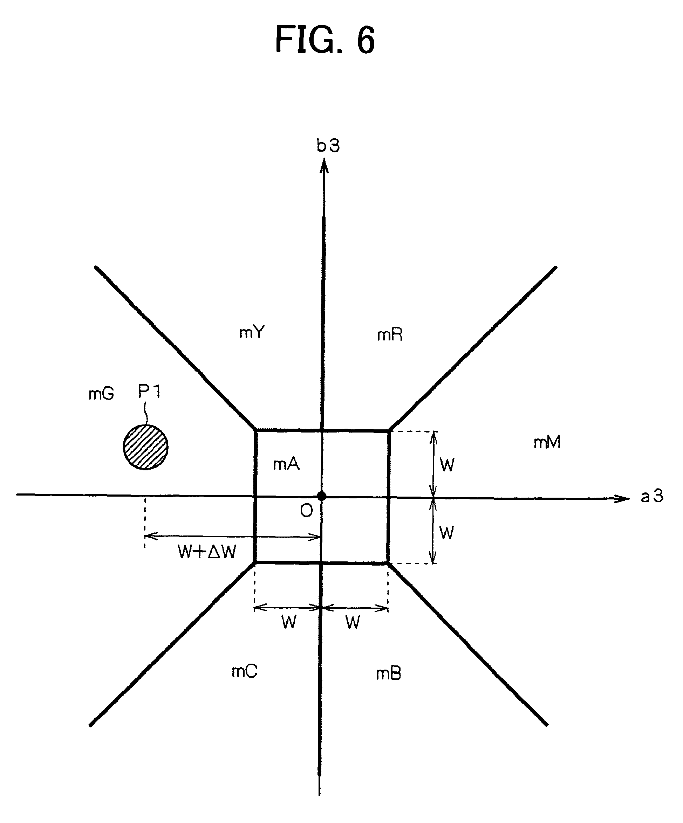

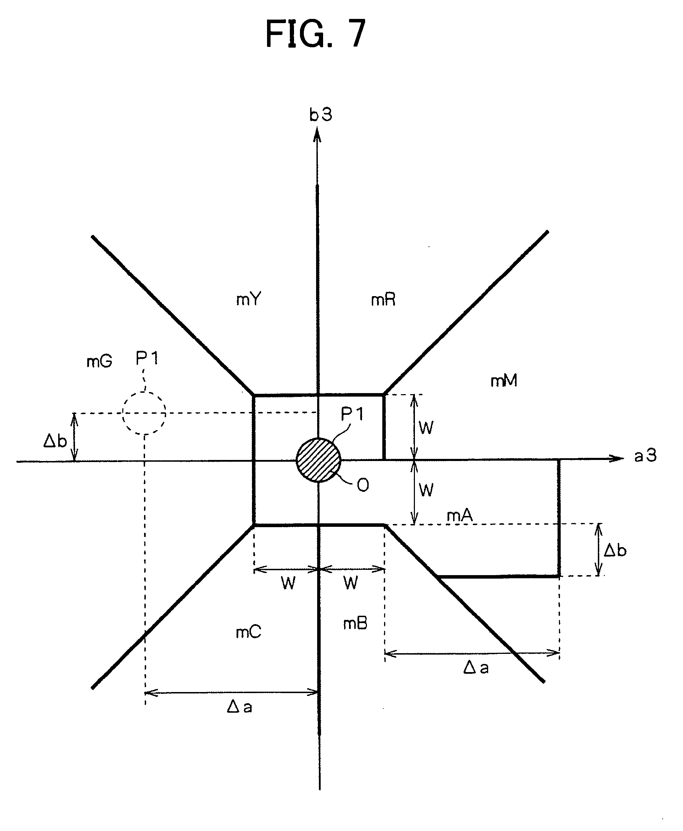

Fig. 6 illustrates the ground color position computed by the ground color setting unit 71 (ground color setting unit 171). Fig. 7 illlustrates a technique of enlarging the achromatic region when the affine transform is performed on the image data on the color plane H based on the ground color set by the ground color setting unit 71 (ground color setting unit 171).

At this point, because the target image conversion unit 72 (target image conversion unit 172) performs the affine transform (transform for moving the ground color position to the origin), the achromatic region is enlarged toward the direction corresponding to the movement as illustrated in Fig. 7. That is, the process of enlarging the achromatic region is performed such that the unit image data (unit image data existing near the origin before the affine transform) corresponding to the achromatic color does not deviate from the achromatic region. Referring to Fig. 6, before the enlargement process, the achromatic region mA has a square shape and a point-symmetric shape in relation to the origin of the color plane H, and the achromatic region mA has a side length 2W. In this case, when the ground color position (barycentric position) in which a3 = -Δa and b3 = Δb in the color region mG is moved to the origin on the color plane H by the affine transform, it is necessary the region mA where it should be decided that the region is the achromatic color be enlarged by Δa in the a3 axis positive direction and by -Δb in the b axis negative direction in the color region mB which is symmetrical with the color region mG in relation to the origin of the color plane H (see Fig. 7). That is, the region mA where it should be decided that the region is the achromatic color is enlarged onto the side of the color region which is symmetrical with the color region of the ground color in relation to the origin of the color plane H based on the ground color position set by the ground color setting unit 71 (ground color setting unit 171).

Thus, in the case where the target image conversion unit 72 (target image conversion unit 172) performs the decision process on the image data on which the affine transform is performed on the color plane H, the unit-image data decision unit 65 (first unit-image data decision unit 165) enlarges the region mA where it should be decided that the region is the achromatic color to the color region which is symmetrical with the color region of the ground color in relation to the origin of the color plane H. That is, in the decision process after the affine transform, the achromatic region mA becomes the region including both the ground color region and the achromatic region. The unit-image data decision unit 65 performs the decision process on each unit image data using the enlarged achromatic region mA and the plural color regions mC, mM, mY, mR, mG, and mB. Therefore, for the target image which is scanned from the original, such as colored paper, having the ground color, the processing mode can be selected while the ground color is dealt with as the achromatic color.

The process of enlarging the achromatic region mA based on the ground color may be performed according to the user setting through the display unit 63 (display unit 163) or the operation unit 64 (operation unit 164). For example, in the case where it is desired that the original with a colored ground-color (character and the like are black) is decided as monochrome, the user sets the process of enlarging the achromatic region mA based on the ground color. On the other hand, in the case where it is desired that the original with a colored ground-color (character and the like are black) is decided as color, the user cancels the setting of the process of enlarging the achromatic region mA. Thus, the target image decision unit 80 (target image decision unit 180) may decide that the ground color portion of the original is the achromatic color based on the user setting through the display unit 63 (display unit 163) or the operation unit 64 (operation unit 164).

When the decision process and the counting process are completed for all the pieces of unit image data in the focused block, the block decision unit 67b (first block decision unit 167b) decides the color included in the focused block based on the counting result of the unit-image data counting unit 66b (first unit-image data counting unit 166b) (S205).

Then, on the basis of the decision result of the block decision unit 67b (first block decision unit 167b), the block counting unit 68b (first block counting unit 168b) adds the block counting value of the region where it is decided that the region is included in the block for each of the plural color regions mC, mM, mY, mR, mG, and mB and the achromatic region mA (S206).

The block decision process and block counting process of Steps S205 and S206 are performed for all the blocks in the target image (S207).

When the mode selection unit 81 (mode selection unit 181) selects the processing mode, the color decision process is ended (S208 to S210). That is, when one of the block counting values of the plural color regions mC, mM, mY, mR, mG, and mB is not lower than a predetermined threshold (S208), the mode selection unit 81 (mode selection unit 181) selects the color mode as the operation mode of the processing unit (S209). On the other hand, when any of the block counting values of the plural color regions mC, mM, mY, mR, mG, and mB is smaller than the predetermined threshold (S208), the mode selection unit 81 (mode selection unit 181) selects the monochrome mode as the operation mode (S210).

### 4. Modifications

(1) In the first embodiment, the ground color decision unit 70 (ground color decision unit 170) and the target image decision unit 80 (target image decision unit 180) individually include the unit-image data decision unit 65 (65a and 65b) (first unit-image data decision unit 165 (165a and 165b)), the unit-image data counting unit 66 (66a and 66b) (first unit-image data counting unit 166 (166a and 166b)), the block decision unit 67 (67a and 67b) (first block decision unit 167 (167a and 167b)), and the block counting unit 68 (68a and 68b) (block counting unit 168 (168a and 168b)). However, the configuration of the image color decision apparatus 1 (image color decision apparatus 101) is not limited thereto.

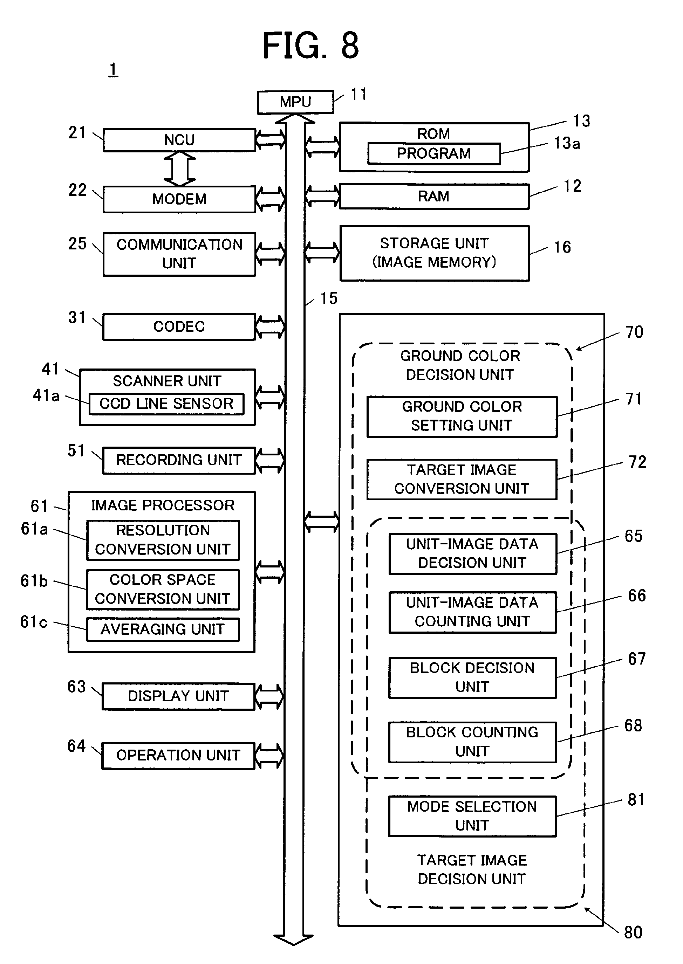

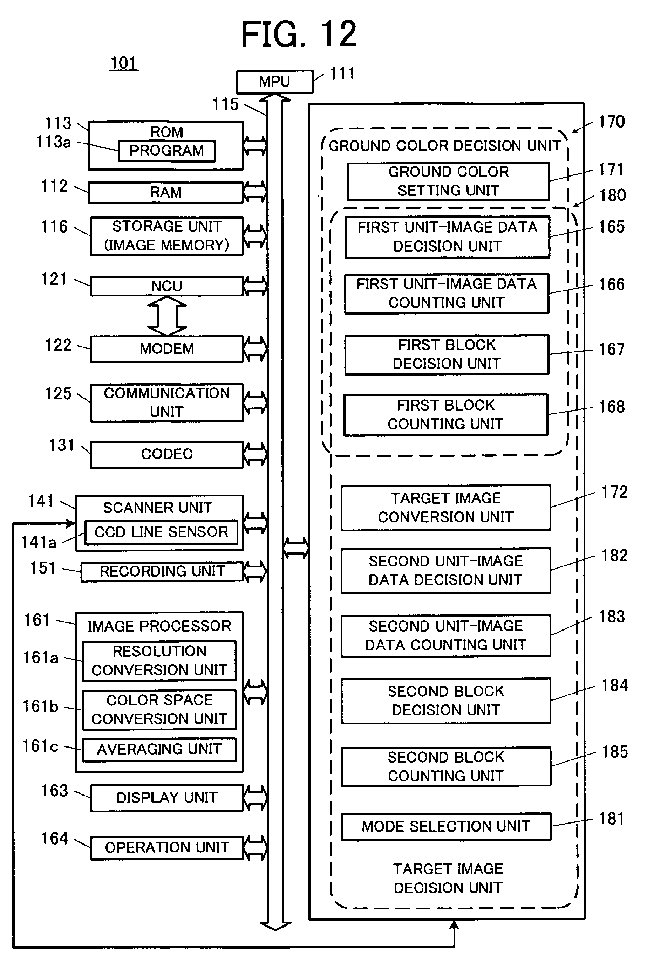

Referring to Figs. 8 and 12, the functions of the ground color decision unit 70 (ground color decision unit 170) and target image decision unit 80 (target image decision unit 180) may be realized by the common unit-image data decision unit 65 (unit-image data decision unit 165), unit-image data counting unit 66 (unit-image data counting unit 166), block decision unit 67 (block decision unit 167), and block counting unit 68 (block counting unit 168).

(2) In the first embodiment, the ground color decision unit 70 (ground color decision unit 170) and the target image decision unit 80 (target image decision unit 180) are realized in a circuit (hardware) manner. However, the present invention is not limited thereto. For example, the MPU 11 (MPU 111) may realize the functions of the ground color decision unit 70 (ground color decision unit 170) and target image decision unit 80 (target image decision unit 180) based on the program 13a (program 113a) stored in the ROM 13 (ROM 113).

(3) In the first embodiment, the ground color decision unit 70 (ground color decision unit 170) makes the ground color decision based on the original leading-end image. However, the present invention is not limited thereto. The ground color decision may be made using a rear end of the target image or part of image data at leading end on the right end.

In the first embodiment, because the ground color decision is made based on the original leading-end image, storage means for simultaneously storing one page of the image data concerning the original image is not provided, so that the first embodiment can be applied to the image color decision apparatus which performs the sequential process from the original leading-end image toward the original rear-end image. That is, even if the storage means has a capacity not more than one page, the result of the ground color decision made based on the original leading-end image can be reflected on the color decision processes of the subsequent original image data. In the case where the storgae means capable of storing simultaneously one page of the original image data is provided, the ground color decision can be made based on the original rear-end image or the original right-end image in addition to the original leading-end image.

(4) In the first embodiment, as illustrated in Fig. 7, the region (achromatic region) where it should be decided that the region is the achromatic color is enlarged toward the direction in which the image data is moved by the affine transform. However, the enlargement method is not limited thereto. That is, in the ground color decision, when the decision of the ground color position on the two-dimensional color plane H is made, the achromatic region mA can also be enlarged in the direction including the ground color position. The direction in which the achromatic region mA is enlarged, and the size of the achromatic region mA are determined according to a positional relationship between the ground color position and the origin on the color plane H. In this case, the affine transform for the color decision is not required on the image data.

(5) In the first embodiment, the unit-image data decision unit 65 (unit-image data decision unit 165) performs the ground color decision and the color decision on the target image expressed by Lab. However, the present invention is not limited thereto. The colorimetric system except Lab can be used as long as the colorimetric system, such as YCrCb, YIQ, Luv, has the parameter (luminance and lightness) concerning the brightness and the parameter (color difference, hue, and chroma) concerning the chromaticity. In the first embodiment, the chromaticity is a concept including the color difference, the hue, and the chroma.

### (Second Embodiment)

A second embodiment of the present invention will be described in detail with reference to the drawings.

### 1. Configuration of Image Color Decision Apparatus

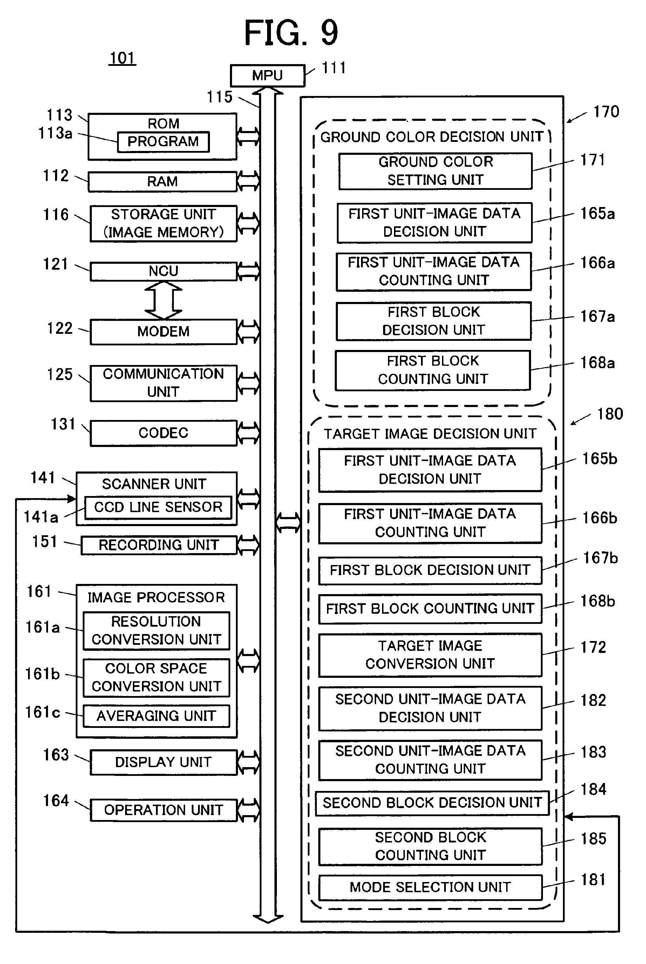

Fig. 9 illustrates an example of a configuration of an image color decision apparatus 101 according to the second embodiment. The image color decision apparatus 101 is a multifunction peripheral in which functions of a scanner, a printer, a copying machine, and a facsimile are combined. The image color decision apparatus 101 can detect a ground color of an original scanned by a scanner unit 141.

Referring to Fig. 9, the image color decision apparatus 101 mainly includes a modem 122, the scanner unit 141, a recording unit 151, a ground color decision unit 170, and a target image decision unit 180. As used herein, the "ground color" shall mean a background color existing in the original.

The modem 122 converts the digital data into the transmitting speech signal, and the modem 122 converts the speech signal transmitted from the outside of the image color decision apparatus 101 and received by the image color decision apparatus 101 into the digital data. An NCU 121 is a device required to connect the image color decision apparatus 101 to a public telephone switched network, and the NCU 121 performs sending and receiving and dial control. A communication unit 125 is a LAN interface which conducts the data communication with an information processing apparatus (not shown) connected through a network.

A CODEC 131 is used in the reversible process of compressing the image transmitted by the facsimile communication. The CODEC 131 encodes the image which is scanned from the original with the scanner unit 141 and binarized in an image processor 161. The encoded image is stored in an image memory 116. The CODEC 31 decodes the facsimile data (binary data) transmitted from another image color decision apparatus. The decoded binary data is supplied to the recording unit 151, and the recording process is performed.

One of MH (Modified Huffman), MR (Modified Read), MMR (Modified MR), and JBIG (Joint Bi-level Image Experts Group) is adopted in the case where the CODEC 131 encodes binary data. The CODEC 131 also encodes the multi-value data. For example, the multi-value data is encoded by JPEG (Joint Photographic Experts Group).

The scanner unit 141 is a scanning unit which scans an original image. The image data (scanned image data) scanned by the scanner unit 141 is compressed by JPEG using the CODEC 131, and the compressed image data is stored in the image memory 116.

The scanner unit 141 scans the image drawn on the original with a CCD line sensor 141a and generates the image data concerning the image. The scanner unit 141 scans the image drawn on the original by the ADF (Automatic Document Feeder) method or the FBS (Flat Bed Scanner) method. The ADF method means a method in which the original is fed and scanned one by one from a bundle of plural originals, and the FBS method means a method of scanning the original placed on a contact glass. Examples of the ADF method include a method (sheet through method) in which the moving original is scanned with a static scanning optical system and a method in which the static original is scanned with the moving scanning optical system. In the case where the latter is adopted, the scanner unit 141 repeats the following scanning procedure. That is, the original is caused to stand still on the contact glass, the original is scanned with the moving scanning optical system, and the scanned original is discharged.

In scanning the original with the scanning optical system which introduces the light from the original to the CCD line sensor 141a, the CCD line sensor 141a repeats the scanning at constant intervals to generate the image data expressed by the RGB color space, i.e., the image data having the pieces of color component data of R (Red), G (Green), and B (Blue). The scanning speed of the scanning optical system is set based on the resolution in the sub-scanning direction of the image data generated by the CCD line sensor 141a. Specifically, the scanning speed of the scanning optical system is reduced as the resolution in the sub-scanning direction is increased, and the scanning speed of the scanning optical system is increased as the resolution in the sub-scanning direction is decreased. The "scanning speed" means a relative moving speed between the original and the scanning optical system.

The recording unit 151 is an image forming unit in which a toner image is recorded on the recording paper by the electrophotography method based on an electrostatic latent image. For example, the recording unit 151 forms the toner image on a photoconductive drum (not shown) based on the scanned image data, and the recording unit 151 transfers the toner image onto the recording paper. Thus, the recording unit 151 is used as the processing unit which performs the recording process on the image of the recording target.

The image processor 161 is a processing unit which performs predetermined image processing on the image data. For example, the image processor 161 performs the gamma correction process on the image data. The image processor 161 includes a resolution conversion unit 161a, and the resolution conversion unit 161a converts the resolution of the image data. The image processor 161 includes a color space conversion unit 161b, and the color space conversion unit 161b converts the color space of the image data from a first color space into a second color space. For example, the first color space is the RGB color space and the second color space is the Lab (lightness L and chromaticities a and b) color space. The image processing may be realized in a software manner using an MPU 111 based on a program 113a stored in the ROM 113.

A display unit 163 is formed by a so-called liquid crystal display, and the display unit 163 has a function of "touch panel" in which the finger or the dedicated pen can come into contact with the screen to specify the position on the screen. Accordingly, a user of the image color decision apparatus 101 (hereinafter simply referred to as "user") uses the "touch panel" function of the display unit 163 to provide an instruction based on contents displayed on the display unit 163, which causes the image color decision apparatus 101 to perform a predetermined operation. Thus, the display unit 163 is also used as an input unit.

An operation unit 164 is an input unit constituted by a so-called key pad. The user can cause the image color decision apparatus 101 to perform a predetermined operation by performing input operation based on display contents on the display unit 163.

The ground color decision unit 170 decides the ground color of the target image based on the image obtained by scanning the original with the scanner unit 141 or the image (hereinafter also referred to as "image data concerning target image") stored in the image memory 116. That is, the ground color decision unit 170 detects (decides) the presence or absence of the ground color of the target image, and the ground color decision unit 170 detects (decides) the color (coordinate on two-dimensional color plane) of the ground color when the target image is the image (ground color original) having the ground color.

Using the decision result of the ground color decision unit 170, the target image decision unit 180 makes the color decision of the target image based on the image data concerning the target image. The target image decision unit 180 also selects the processing mode based on the result of the color decision. The processing mode is performed in the processing unit such as the recording unit 151 and the image processor 161. For example, the target image decision unit 180 is configured to select a color mode and a monochrome mode as the processing mode. The color process can be performed in the color mode, and the monochrome process can be performed in the monochrome mode. That is, the target image decision unit 180 selects the color mode as the processing mode when a color having the chromaticity similar to that of the ground color set by the ground color decision unit 170 and being brighter than the ground color exists.

The detailed configurations of the ground color decision unit 170 and target image decision unit 180 will be described later. The ground color decision unit 170 counts the number of constitutional units (pieces of unit image data) of the image data in each color region on the two-dimensional plane, and the ground color decision unit 170 uses the counting result to decide the presence or the absence of the ground color. That is, the ground color decision unit 170 counts the constitutional unit in each color region formed on the two-dimensional color plane, and the ground color decision unit 170 decides the presence or absence of the ground color based on whether or not the constitutional unit distribution exists while being biased in a particular color region. When the constitutional unit distribution exists while being biased in a particular color region, the ground color decision unit 170 decides that the ground color of the color corresponding to the particular color region exists. When the constitutional unit distribution does not exist while being biased in the particular color region, namely when the constitutional unit distribution is evenly dispersed in the plural color regions, the ground color decision unit 170 decides that the ground color does not exist. When the constitutional unit distribution exists while being biased in the achromatic region, the ground color decision unit 170 also decides that the ground color does not exist.

The target image decision unit 180 counts the number of constitutional units (pieces of unit image data) of the image data in each color region on the two-dimensional color plane, and the target image decision unit 180 uses the counting result to make the color decision. That is, the target image decision unit 180 counts the constitutional unit in each color region formed on the two-dimensional color plane, and the target image decision unit 180 uses the counting result to make the color decision of the target image. The color region is divided into an achromatic region (region near the origin) and a chromatic region (region except the achromatic region), and the decision whether the target image is the color image or the monochrome image can be made based on the constitutional unit distribution in the achromatic region and the chromatic region. For example, in the case where a large number of constitutional units exist in the achromatic region while a small number of constitutional units exist in the chromatic region, it can be decided that the target image is the monochrome image. On the other hand, in the case where a large number of constitutional units exist in the chromatic region, it can be decided that the target image is the color image.

Thus, although the ground color decision unit 170 and the target image decision unit 180 perform the different processes, performing the counting process in each color region is common to the ground color decision unit 170 and the target image decision unit 180. Therefore, in the second embodiment, the counting processes are performed by the ground color decision unit 170 and the target image decision unit 180 using the common circuit. This enables the configuration of the image color decision apparatus 101 to be simplified.

The RAM (Random Access Memory) 112 and the image memory 116 are volatile memories (storage unit) in which the data is freely read and written. The ROM (Read Only Memory) 113 is a read only memory. The MPU (Micro Processing Unit) 111 performs control according to the program 113a stored in the ROM 113. The MPU 111, the ROM 113, and the recording unit 151 are electrically connected to one another through a signal line (bus) 115. Accordingly, the MPU 111 can cause the recording unit 151 to perform the recording process at predetermined timing.

The CODEC 131 which acts as a compression and expansion unit obtains the image data to generate the compressed image data, and the CODEC 131 accumulates the compressed image data in the image memory 116.

As described above, the processing mode of the image color decision apparatus 101 includes the "monochrome mode" and the "color mode".

In performing the scanning in the "color mode", the color space conversion unit 161b converts the multiple tone RGB image data inputted from the resolution conversion unit 161a into the multiple tone YCC image data, and the CODEC 131 compresses the multiple tone YCbCr image data by JPEG or the like to accumulate the compressed data in the image memory 116.

In performing the copying in the "color mode", the color space conversion unit 161b converts the multiple tone RGB image data inputted from the resolution conversion unit 161a into multiple tone Lab image data (image data expressed by the L*a*b*color space), and the color space conversion unit 161b further converts the multiple tone Lab image data into the multiple tone CMYK image data (image data expressed by the CMYK color space). The multiple tone CMYK image data is binarized into the two-tone CMYK image data. The recording unit 151 obtains the two-tone CMYK image data, and the recording unit 151 forms the color image on the recording medium using necessary one of "Y", "M", "C", and "K" image forming engines (four-color image forming engine). As used herein, "using necessary one of "Y", "M", "C", and "K" image forming engines (four-color image forming engine)" shall mean that only the necessary image forming engine may be operated in order to express the color included in the image. For example, only the "Y" image forming engine may be operated when a color segmentation of the color included in the image has only "Y", and only the "Y" and "M" image forming engines may be operated when the color segmentation of the color included in the image has only "R".

In performing the scanning in the "monochrome mode" when the original is a gray-scale original (such as black-and-white photograph original), the color space conversion unit 161b converts the multiple tone RGB image data inputted from the resolution conversion unit 161a into the multiple tone YCbCr image data, and the CODEC 131 compresses a luminance component Y of the multiple tone YCbCr image data by JPEG to accumulate the compressed data in the image memory 116.

Alternatively, in performing the scanning in the "monochrome mode" when the original is a gray-scale original (such as black-and-white photograph original), the color space conversion unit 161b converts the multiple tone RGB image data inputted from resolution conversion unit 161a into the multiple tone YCbCr image data. The luminance component Y of the multiple tone YCbCr image data is binarized into the two-tone luminance component Y by the ordered dither method or the like, and the CODEC 131 compresses the two-tone luminance component Y by JBIG to accumulate the compressed data in the image memory 116.

On the other hand, in performing the scanning in the "monochrome mode" when the original is a black-and-white original (such as black-and-white character original), the color space conversion unit 161b converts the multiple tone RGB image data inputted from the resolution conversion unit 161a into the multiple tone YCbCr image data. The luminance component Y of the multiple tone YCbCr image data is binarized into the two-tone luminance component Y by a simple binarization method or the like, and the CODEC 131 compresses the two-tone luminance component Y by JBIG to accumulate the compressed data in the image memory 116.

In making a copy in the "monochrome mode" when the original is a gray-scale original (such as black-and-white photograph original), the color space conversion unit 161b converts the multiple tone RGB image data inputted from the resolution conversion unit 161a into the multiple tone YCC image data. The luminance component Y of the multiple tone YCC image data is binarized into the two-tone luminance component Y by the ordered dither method or an error diffusion method. The recording unit 151 obtains the two-tone luminance component Y, and the recording unit 151 forms the monochrome image on the recording medium using the "K" image forming engine.

On the other hand, in making the copy in the "monochrome mode" when the original is a black-and-white original (such as black-and-white character original), the color space conversion unit 161b converts the multiple tone RGB image data inputted from the resolution conversion unit 161a into the multiple tone YCbCr image data. The luminance component Y of the multiple tone YCbCr image data is binarized into the two-tone luminance component Y by the error diffusion method, the simple binarization method or the like. The recording unit 151 obtains the two-tone luminance component Y, and the recording unit 151 forms the monochrome image on the recording medium using the "K" image forming engine.

In making the copy of the gray-scale original, desirably the binarization is performed while emphasis is put on the gray-scale reproducibility rather than in making a copy of the black-and-white original. In making the copy of the black-and-white original, desirably the binarization is performed while emphasis is put on the character reproducibility rather than in making a copy of the gray-scale original.

### 2. Configurations of Ground Color Decision Unit and Target Image Decision Unit

Configurations of the ground color decision unit 170 and the target image decision unit 180 will be described below. Referring to Fig. 9, the ground color decision function of the ground color decision unit 170 is realized by a first unit-image data decision unit 165a, a first unit-image data counting unit 166a, a first block decision unit 167a, a first block counting unit 168a, and a ground color setting unit 171.

Referring to Fig. 9, the color decision function of the target image decision unit 180 is realized by the first unit-image data decision unit 165b, a second unit-image data decision unit 182, the first unit-image data counting unit 166b, a second unit-image data counting unit 183, the first block decision unit 167b, a second block decision unit 184, the first block counting unit 168b, a second block counting unit 185, a target image conversion unit 172, and a mode selection unit 181.

The first unit-image data decision unit 165b, the first unit-image data counting unit 166b, the first block decision unit 167b, and the first block counting unit 168b of the target image decision unit 180 realize the functions similar to those of the corresponding first unit-image data decision unit 165a, the first unit-image data counting unit 166a, the first block decision unit 167a, and the first block counting unit 168a of the ground color decision unit 170.

In the second embodiment, each of the first unit-image data decision unit 165 (165a and 165b), first unit-image data counting unit 166 (166a and 166b), first block decision unit 167 (167a and 167b), first block counting unit 168 (168a and 168b), second unit-image data decision unit 182, second unit-image data counting unit 183, second block decision unit 184, and second block counting unit 185 performs the counting process and the decision process not based on the pixel data constituting the target image but based on the unit image data (constitutional unit) obtained according to the target image.

The unit image data is a pixel group into which the target image is divided in each n (n is a natural number) adjacent pixels, and an average value of pixels included in the corresponding pixel group is used as the value of the unit image data.

For example, each unit image data is formed by the pixel groups into which the target image is divided by two pixels long (in the sub-scanning direction) and two pixels wide (in the main scanning direction) (i.e., n="4"), and the target image color space is RGB. Then, R values, G values, and B values of the four pixels included in the corresponding pixel group are averaged and used as the value (R, G, B) of each unit image data. Thus, in the second embodiment, the process of generating the unit image data is realized as the averaging process of averaging the predetermined number of adjacent pieces of pixel data. The averaging process is performed by an averaging unit 161c.

In the second embodiment, the first unit-image data decision unit 165, the first unit-image data counting unit 166, the first block decision unit 167, the first block counting unit 168, the second unit-image data decision unit 182, the second unit-image data counting unit 183, the second block decision unit 184, and the second block counting unit 185 perform the processes on the image data on which affine transform is performed on the color plane H of the two-dimensional color plane.

In the following description, first the color plane H will be described, and then the first unit-image data decision unit 165, the second unit-image data decision unit 182, the first unit-image data counting unit 166, the second unit-image data counting unit 183, the first block decision unit 167, the second block decision unit 184, the first block counting unit 168, the second block counting unit 185, the ground color setting unit 171, the target image conversion unit 172, and the mode selection unit 181 which are of components of the ground color decision unit 170 and target image decision unit 180 will be described.

### 2.1. Configuration of Color Plane

The configuration of the color plane in the second embodiment is illustrated in Figs. 2 and 3 of the first embodiment, so that the description is omitted.

Generally, in the color plane H0, sometimes the gradients of the hue boundary lines D1 to D6 become irrational numbers. In such cases, because the irrational computation is required with the inverse trigonometric function to decide the color of the unit image data, sometimes the decision efficiency becomes worsened. Therefore, in the processes of the first unit-image data decision unit 165, second unit-image data decision unit 182, first unit-image data counting unit 166, second unit-image data counting unit 183, first block decision unit 167, second block decision unit 184, first block counting unit 168, and second block counting unit 185, at least the affine transform such as the rotational transform is performed on the image data on the color plane H0 to use the color plane H in which the gradients of the hue boundary lines D1 to D6 become rational numbers.

### 2.2. Components of Ground Color Decision Unit and Target Image Decision Unit

Components of the ground color decision unit 170 and target image decision unit 180 will be described below. The first unit-image data decision unit 165 (165a and 165b) performs the decision process on the image data in which the image processor 161 converts the RGB color space into the Lab color space. That is, the first unit-image data decision unit 165 decides whether the unit image data obtained based on the image data belongs to the achromatic region mA or the color regions mC, mM, mY, mR, mG, and mB corresponding to a particular chromatic color in the color plane H.

The first unit-image data counting unit 166 (166a and 166b) divides the image data into plural blocks formed by 900 pieces of unit image data 30 long by 30 wide. The first unit-image data counting unit 166 counts the number of pieces of unit image data belonging to each of the plural color regions mC, mM, mY, mR, mG, and mB and the achromatic region mA in each block based on the decision result of the first unit-image data decision unit 165.

For example, the first unit-image data counting unit 166 counts the number of pieces of unit image data belonging to the color region mC in the 900 pieces of unit image data included in the blocks, and the first unit-image data counting unit 166 stores the counting result in the RAM 112. Similarly, the first unit-image data counting unit 166 counts the number of pieces of unit image data belonging to each of the color regions mM, mY, mR, mG, and mB and the achromatic region mA, and the first unit-image data counting unit 166 stores the counting result in the RAM 112.

The first block decision unit 167 (167a and 167b) decides the color included in each block based on the counting result of the first unit image data counting unit 166. That is, the first block decision unit 167 decides the color included in each block by comparing the counting value of each of the color regions mC, mM, mY, mR, mG, and mB and the achromatic region mA to a reference value for existence confirmation.

For example, in the case where only the counting values of the color regions mC and mM for a certain block exceed the reference value for existence confirmation, the first block decision unit 167 decides that cyan C and magenta M are included in the block. In the case where only the counting value of the achromatic region mA for a certain block exceeds the reference value for existence confirmation, the first block decision unit 167 decides that only the achromatic color is included in the block.

The threshold (reference value for existence confirmation) used to confirm the existence of the unit image data may have a different value in each of the color regions mC, mM, mY, mR, mG, and mB and the achromatic region mA, or the threshold may have the same value.

The first block counting unit 168 (168a and 168b) computes a block counting value in each of the color regions mC, mM, mY, mR, mG, and mB and the achromatic region mA based on the decision result of each block, which is performed by the first block decision unit 167. That is, the first block counting unit 168 adds the counting values (block counting values) of the color region and achromatic region corresponding to the colors. The first block decision unit 167 decides that the colors are included in each block. For example, in the case where the first block decision unit 167 decides that only cyan C and magenta M are included in a certain block, the first block counting unit 168 adds the counting values of the color regions mC and mM as the counting process concerning the block. In the case where the first block decision unit 167 decides that only the achromatic color is included in a certain block, the first block counting unit 168 adds the counting value of the achromatic region mA as the counting process concerning the block. Then, the first block counting unit 168 stores the counting result (block counting value) in each of the plural color regions mC, mM, mY, mR, mG, and mB and the achromatic region mA in the RAM 112.

The ground color setting unit 171 sets the ground color of the image data based on the counting result of the first block counting unit 168a when the first unit-image data decision unit 165a, the first unit-image data counting unit 166a, the first block decision unit 167a, and the first block counting unit 168a perform the processes on the image data.

For example, in the case where one or two block counting values counted in each of the plural color regions mC, mM, mY, mR, mG, and mB and the achromatic region mA are not lower than a ground color reference value, the ground color setting unit 171 decides that the ground color exists in the color region whose block counting value is not lower than the ground color reference value, and the ground color setting unit 171 selects the corresponding color region.

That is, the ground color setting unit 171 decides the presence or absence of the ground color based on the block counting value of each color region (each color region on the two-dimensional color plane) and the ground color reference value, and the ground color setting unit 171 decides the color region corresponding to the ground color when deciding that the ground color exists in the color region.

The ground color setting unit 171 decides that the ground color exists, when the color region whose block counting value exceeds the ground color reference value exists. The ground color setting unit 171 decides that the color region is one which corresponds to the ground color. In the case of the plural ground color reference values, when not only one color region exceeds a first ground color reference value but also two color regions exceed a second ground color reference value, the ground color setting unit 171 also decides that the ground color exists.

On the basis of the barycentric positions of the plural pieces of unit image data included in a selected color region, the ground color setting unit 171 sets the ground color position for the color region selected according to the counting result of the first block counting unit 168. At this point, the ground color setting unit 171 computes a three-dimensional ground color region P1 based on three-dimensional distribution of the plural pieces of unit image data included in the selected color region.

For example, in setting the three-dimensional ground color region P1, the maximum values and minimum values of the L value, a3 value, and b3 value are determined for the plural pieces of unit image data included in the selected color region. That is, a lightness range and a chromaticity range of the ground color are determined based on the three-dimensional distribution of the unit image data in the color region. The barycentric position is determined as the ground color position based on the unit image data included in the lightness range and the chromaticity range (i.e., the ground color region P1 (see Fig. 6)). Therefore, the detection of the wrong ground color can further be prevented.

The technique of computing the ground color position is not limited to the above technique. For example, the ground color position may be computed based on the maximum value and minimum value of the unit image data included in the selected color region (for example, the average value of the maximum value and the minimum value). The maximum values and minimum values of the L value, a3 value, and b3 value which are determined in setting the ground color are stored in the RAM 112.

The target image conversion unit 172 performs the affine transform on the image data (unit image data) on the color plane H based on the ground color set by the ground color setting unit 171. Specifically, the target image conversion unit 172 translates image data which becomes the decision target such that the ground color position (barycentric position) computed by the ground color setting unit 171 becomes the origin of the color plane H formed by the plural color regions mC, mM, mY, mR, mG, and mB and the achromatic region mA.

The second unit-image data decision unit 182 performs the decision process on the image data on which the target image conversion unit 172 performs the affine transform. That is, the second unit-image data decision unit 182 decides whether or not the unit image data obtained based on the image data after the affine transform is included in the ground color chromaticity range set by the ground color setting unit 171 and, at the same time, the second unit-image data decision unit 182 decides whether or not the brightness is not lower than a brightness threshold set by the ground color setting unit 171. The maximum value of the L value determined by the ground color setting unit 171 may be used as the brightness threshold.

The second unit-image data counting unit 183 performs the counting process based on the decision result of the second unit-image data decision unit 182. That is, the second unit-image data counting unit 183 counts the number of pieces of unit image data (hereinafter also referred to as "ground color upper image data"). The pieces of unit image data are included in the ground color chromaticity range set by the ground color setting unit 171, and the brightness of the unit image data is not lower than the brightness threshold set by the ground color setting unit 171.

The second block decision unit 184 decides whether or not the ground color upper image data is included in each block based on the counting result of the second unit-image data counting unit 183. For example, when the counting result of the second unit-image data counting unit 183 is not lower than the predetermined threshold, the second block decision unit 184 decides that focused block includes the ground color upper image data. On the other hand, when the counting result of the second unit-image data counting unit 183 is smaller than the predetermined threshold, the second block decision unit 184 decides that the focused block does not include the ground color upper image data.

The second block counting unit 185 counts the number of blocks in which the block decision unit 184 decides that the focused block includes the ground color upper image data based on the decision result of each block made by the second block decision unit 184. The second block counting unit 185 stores the counting result (block counting value) in the RAM 112.

The mode selection unit 181 makes the color decision based on the image data on which the affine transform is performed on the color plane H while the ground color position is set to the origin of the color plane H, and the mode selection unit 181 selects the processing mode based on the color decision result. That is, the mode selection unit 181 selects the processing mode based on the counting results of the first block counting unit 168b and second block counting unit 185, when the first unit-image data decision unit 165b, the second unit-image data decision unit 182, the first unit-image data counting unit 166b, the second unit-image data counting unit 183, the first block decision unit 167b, the second block decision unit 184, the first block counting unit 168b, and the second block counting unit 185 perform the processes on the image data on which the target image conversion unit 172 performs the affine transform.

For example, in the case where the block counting value of the color region mC is not lower than a predetermined threshold, the mode selection unit 181 decides that the target image is the color image, and the mode selection unit 181 selects the "color mode" as the processing mode. Similarly, in the case where one of the block counting values of the color regions mM, mY, mR, mG, and mB is not lower than the predetermined threshold, the mode selection unit 181 decides that the target image is the color image, and the mode selection unit 181 selects the "color mode" as the processing mode.

In the case where the counting result (block counting value) performed by the second block counting unit 185 is not lower than the brightness reference value, the mode selection unit 181 selects the "color mode" as the processing mode. Therefore, the processing unit such as the recording unit 151 and the image processor 161 can perform good processing without spoiling the beauty for the portion which is included in the ground color range in the image data and is not lower than the brightness threshold.

On the other hand, all the block counting values of the color regions mC, mM, mY, mR, mG, and mB are lower than the predetermined threshold, the mode selection unit 181 decides that the target image is the monochrome image, and the mode selection unit 181 selects the "monochrome mode" as the processing mode. In the case where the counting result of the second block counting unit 185 is lower than the brightness reference value, the mode selection unit 181 selects the monochrome mode.

The processing unit such as the recording unit 151 and the image processor 161 performs predetermined processes on the image data concerning the target image based on the processing mode (color mode or monochrome mode) selected by the mode selection unit 181.

For example, in the case where the mode selection unit 181 selects the monochrome mode, the recording unit 151 records the monochrome-converted image data on the recording paper. In the case where the mode selection unit 181 selects the color mode, the CODEC 131 compresses the image data in the form of the color data by JPEG.

The threshold used in the color decision may have a different value in each of the color regions mC, mM, mY, mR, mG, and mB and the achromatic region mA, or the threshold may have the same value.

### 3. Ground Color Decision and Color Decision Procedure

In the second embodiment also, the ground color decision procedure is illustrated in Fig. 4, and the color decision procedure is illustrated in Fig. 5.

### 3.1. Ground Color Decision Procedure

In the second embodiment, in Step S202 of Fig. 5, the first unit-image data decision unit 165b decides whether the unit image data included in the focused block belongs to the plural color regions mC, mM, mY, mR, mG, and mB, or the achromatic region mA, and the second unit-image data decision unit 182 decides whether or not the focused block includes the ground color upper image data.

In the second embodiment, in Step S203 of Fig. 5, the first unit-image data counting unit 166b counts the number of pieces of unit image data belonging to each of the color regions mC, mM, mY, mR, mG, and mB and the achromatic region mA, and the second unit-image data counting unit 183 counts the number of pieces of ground color upper image data based on the counting result of the second unit-image data decision unit 182.

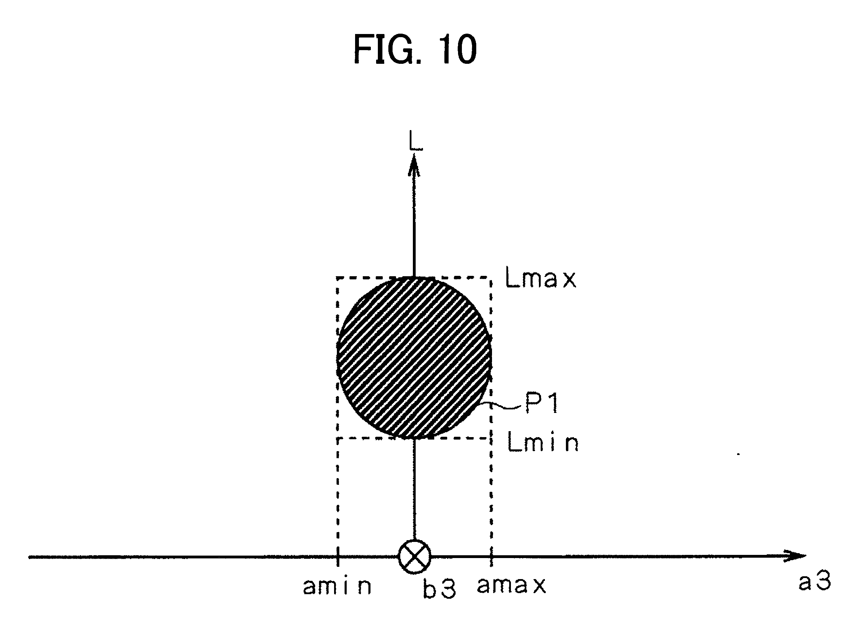

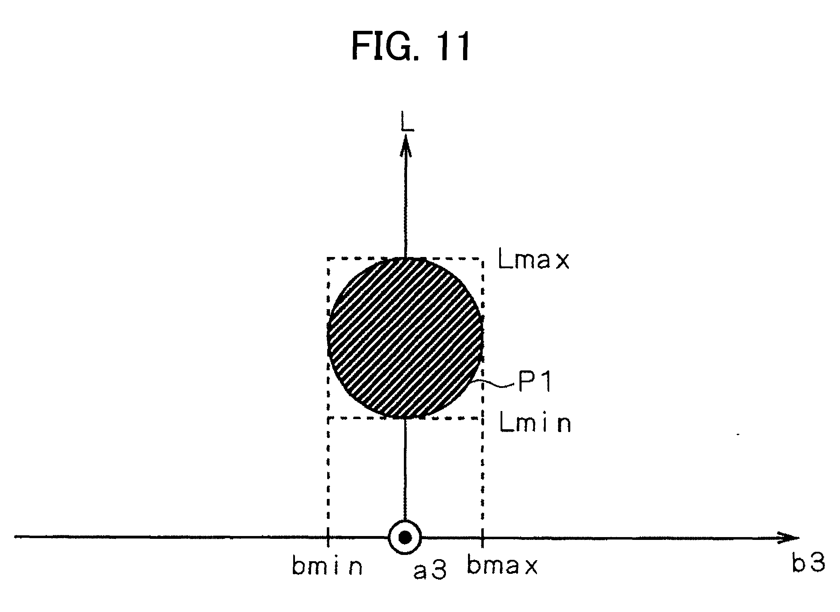

Figs. 10 and 11 illustrates the ground color region P1. When the target image conversion unit 172 performs the affine transform based on the ground color, in the ground color region P1, the chromaticity range is moved to amin ≤ a3 ≤ amax and bmin ≤ b3 ≤ bmax while the lightness range is kept at Lmin ≤ L ≤ Lmax as illustrated in Figs. 10 and 11. The second unit-image data decision unit 182 performs the decision process of each unit image data using both the chromaticity range and the lightness range maximum value Lmax which is used as the brightness threshold. The brightness is a concept including the luminance and the lightness.

In the second embodiment, in Step S205 of Fig. 5, the first block decision unit 167b decides whether the plural pieces of unit image data belonging to the focused block are included in each of the plural color regions mC, mM, mY, mR, mG, and mB and the achromatic region mA, and the second block decision unit 184 decides the color included in the focused block based on the counting result of the second unit-image data counting unit 183.

In the second embodiment, the first block counting unit 168 adds the block counting value of the region in which the first block counting unit 168 decides that the region is included in the block for each of the plural color regions mC, mM, mY, mR, mG, and mB and the achromatic region mA, and the second block counting unit 185 counts the number of blocks in which it is decided that the ground color upper image data is included in the block.

While the present invention has been described with respect to preferred embodiments thereof, it will be apparent to those skilled in the art that the disclosed invention may be modified in numerous ways and may assume many embodiments other than those specifically set out and described above. Accordingly, the appended claims are intended to cover all modifications of the present invention that fall within the true spirit and scope of the present invention.

## Claims

1. An image color decision apparatus which makes a color decision of a target image, the apparatus **characterized by**:
a ground color decision unit which decides presence or absence of a ground color in the target image based on image data concerning the target image, the ground color decision unit deciding the ground color when the target image has the ground color; and
a target image decision unit which uses decision result of the ground color decision unit to make the color decision of the target image based on the image data concerning the target image.

2. The image color decision apparatus according to claim 1, wherein
the ground color decision unit counts the number of image data constitutional units in each color region on a two-dimensional color plane, and the ground color decision unit decides the presence or absence of the ground color using the counting result,
the target image decision unit counts the number of image data constitutional units in each color region on the two-dimensional color plane, and the target image decision unit makes the color decision using the counting result, and
the counting of the ground color decision unit and the counting of the target image decision unit are performed using a common circuit.

3. The image color decision apparatus according to claim 1, wherein a user can set whether or not the decision result of the ground color decision unit is utilized in the color decision of the target image decision unit.

4. The image color decision apparatus according to claim 1, wherein the target image decision unit performs a movement conversion process on the image data according to a positional relationship between an origin and a coordinate corresponding to the ground color decided by the ground color decision unit on the two-dimensional color plane,
the target image decision unit performs a process of enlarging an achromatic region toward the movement direction,
the target image decision unit counts the number of image data constitutional units for the achromatic region and a chromatic region, and
the target image decision unit uses the counting result to make the color decision.

5. The image color decision apparatus according to claim 1, wherein the ground color decision unit counts the number of image data constitutional units on the two-dimensional color plane in each color region,
the ground color decision unit uses the counting result to decide the presence or absence of the ground color, and
the ground color decision unit decides the ground color based on distribution of the constitutional units counted in the color region corresponding to the ground color on the two-dimensional color plane.

6. The image color decision apparatus according to claim 5, wherein the ground color decision unit computes a barycentric position of a plurality of constitutional units counted in the color region corresponding to the ground color on the two-dimensional color plane, and the ground color decision unit decides the ground color based on the barycentric position.

7. The image color decision apparatus according to claim 1, wherein the target image decision unit averages the image data in each pixel set including a plurality of pixels, and target image decision unit makes the color decision of the image data using the averaged image data as a constitutional unit.

8. A method for deciding an image color of making a color decision of a target image, the method **characterized by**:
a ground color decision process of deciding presence or absence of a ground color in the target image based on image data concerning the target image, and deciding the ground color when the target image has the ground color; and
a target image decision process of using decision result of the ground color decision process to make the color decision of the target image based on the image data concerning the target image.

9. An image color decision apparatus which makes a color decision of a target image, the apparatus **characterized by**:
a ground color decision unit which decides presence or absence of a ground color in the target image based on image data concerning the target image, the ground color decision unit deciding brightness and chromaticity of the ground color when the target image has the ground color; and
a target image decision unit which uses decision result of the ground color decision unit to make the color decision of the target image based on the image data concerning the target image.

10. The image color decision apparatus according to claim 9, wherein the target image decision unit decides that the target image is achromatic when chromaticity and brightness of the image data as a decision target correspond to the chromaticity and the brightness of the ground color, and the target image decision unit decides that the target image is chromatic when the chromaticity of the image data as the decision target corresponds to the chromaticity of the ground color while the brightness of the image data as the decision target is different from the brightness of the ground color.

11. The image color decision apparatus according to claim 9, wherein the ground color decision unit counts the number of image data constitutional units in each color region on a two-dimensional color plane, and the ground color decision unit decides the presence or absence of the ground color using the counting result,
the target image decision unit counts the number of image data constitutional units in each color region on the two-dimensional color plane, and the target image decision unit makes the color decision using the counting result, and
the counting of the ground color decision unit and the counting of the target image decision unit are performed using a common circuit.

12. The image color decision apparatus according to claim 9, wherein a user can set whether or not the decision result of the ground color decision unit is utilized in the color decision of the target image decision unit.

13. The image color decision apparatus according to claim 9, wherein the target image decision unit performs a movement conversion process on the image data according to a positional relationship between an origin and a coordinate corresponding to the chromaticity of the ground color decided by the ground color decision unit on the two-dimensional color plane,
the target image decision unit performs a process of enlarging an achromatic region toward the movement direction,
the target image decision unit counts the number of image data constitutional units for the achromatic region and a chromatic region, and
the target image decision unit uses the counting result to make the color decision.

14. The image color decision apparatus according to claim 9, wherein the ground color decision unit counts the number of image data constitutional units in each color region on the two-dimensional color plane,
the ground color decision unit uses the counting result to decide the presence or absence of the ground color, and
the ground color decision unit decides the brightness and the chromaticity of the ground color based on three-dimensional distribution of the constitutional units counted in the color region corresponding to the ground color.

15. The image color decision apparatus according to claim 9, wherein the target image decision unit averages the image data in each pixel set including a plurality of pixels, and target image decision unit makes the color decision of the image data using the averaged pixel data as a constitutional unit.

16. A method for deciding an image color of making a color decision of a target image, the method **characterized by**:
a ground color decision process of deciding presence or absence of a ground color in the target image based on image data concerning the target image, and deciding brightness and chromaticity of the ground color when the target image has the ground color; and
a target image decision process of using decision result of the ground color decision process to make the color decision of the target image based on the image data concerning the target image.
